# EUROPEAN PATENT APPLICATION

(11) **EP 4 607 448 A1**
(43) Date of publication of application: **27.08.2025**
(21) Application number: 22962820.1
(22) Date of filing: 21.10.2022
(51) Int. Cl.: G06Q 50/26

(54) **SYSTEM, SERVER DEVICE, METHOD FOR CONTROLLING SERVER DEVICE, AND RECORDING MEDIUM**

(71) Applicant: NEC Corporation, 108-8001 Tokyo (JP)
(72) Inventor: OTANI Takumi, Tokyo 108-8001 (JP); KUROSE Haruka, Tokyo 108-8001 (JP); SASAMOTO Takeshi, Tokyo 108-8001 (JP)
(74) Representative: Betten & Resch
(86) International application number: PCT/JP2022/039406
(87) International publication number: WO 2024/084714

(57) **Abstract**

A system is provided that contributes to enabling the coexistence of servers with different schemes without increasing the burden on the user. The system includes a shared server, a dedicated server, and a control server. The shared server is shared by a plurality of airports as a server that performs an authentication processing. The dedicated server performs the authentication processing at a single airport. The control server determines an airport that a user is planning to use. The control server transmits information required for the user to proceed with boarding procedures using biometric authentication to either the shared server or the dedicated server, depending on the airport that the user is planning to use.

## Description

### [Technical Field]

The present invention relates to a system, a server apparatus, a control method of a server apparatus, and a storage medium.

### [Background Art]

There is technology related to biometric authentication that can be applied to boarding procedures for aircraft and the like.

For example, Patent Literature 1 describes providing a server apparatus that achieves biometric authentication with a high degree of accuracy. The server apparatus of Patent Literature 1 includes a receiving unit and a processing unit. The receiving unit receives an authentication request from at least one or more types of terminals. The processing unit refers to a database that stores biometric information of each of a plurality of users and processes the authentication request. The processing unit processes the authentication request using biometric information according to the type of terminal transmitting the authentication request, from among the plurality of biometric information stored in the database.

### [Citation List]

### [Patent Literature]

[PTL 1] Japanese Unexamined Patent Application Publication No. JP2022-075775

### [Summary of Invention]

### [Technical Problem]

As disclosed in Patent Literature 1, to provide a service using biometric authentication, it is necessary to install a server that authenticates a person to be authenticated. Furthermore, users need to register information on the server to proceed with boarding procedures using biometric authentication. Here, as a system configuration, there are two possible schemes: one in which the management company of an airport or the like, as described above provides its own server, and one in which a server is shared and located in the cloud or elsewhere. In a case where these two schemes are mixed, users are required to register information that matches the scheme adopted by the airport they are using. However, these demands on users increase the burden on them.

It is a main object of the present invention to provide a system, a system, a server apparatus, a control method of a server apparatus, and a storage medium, which contribute to enabling coexistence of servers with different schemes without increasing burden on users.

### [Solution to Problem]

According to a first aspect of the present invention, there is provided a system, including: a shared server that is shared by a plurality of airports as a server that performs an authentication processing; a dedicated server that performs the authentication processing at a single airport; and a control server, wherein the control server determines an airport that a user is planning to use, and transmits information required for the user to proceed with boarding procedures using biometric authentication to either the shared server or the dedicated server, depending on the airport that the user is planning to use.

According to a second aspect of the present invention, there is provided a server apparatus that communicates with a shared server that is shared by a plurality of airports as a server that performs an authentication processing and a dedicated server that performs the authentication processing at a single airport, wherein the server apparatus, including: a determination unit that determines an airport that a user is planning to use; and a registration unit that transmits information required for the user to proceed with the boarding procedures using biometric authentication to either the shared server or the dedicated server, depending on the airport that the user is planning to use.

According to a third aspect of the present invention, there is provided a control method of a server apparatus that communicates with a shared server that is shared by a plurality of airports as a server that performs an authentication processing and a dedicated server that performs the authentication processing at a single airport, the control method including: determining an airport that a user is planning to use; and transmitting information required for the user to proceed with the boarding procedures using biometric authentication to either the shared server or the dedicated server, depending on the airport that the user is planning to use.

According to a fourth aspect of the present invention, there is provided a computer-readable storage medium storing a program causing a computer mounted on a server apparatus that communicates with a shared server that is shared by a plurality of airports as a server that performs an authentication processing and a dedicated server that performs the authentication processing at a single airport to perform processing for: determining an airport that a user is planning to use; and transmitting information required for the user to proceed with the boarding procedures using biometric authentication to either the shared server or the dedicated server, depending on the airport that the user is planning to use.

### [Advantageous Effects of Invention]

The individual aspects of the present invention provide a system, a server apparatus, a control method of a server apparatus, and a storage medium are provided, which contribute to enabling coexistence of servers with different schemes without increasing burden on users. The advantageous effect of the present invention is not limited to the above advantageous effect. The present invention may provide other advantageous effects, instead of or in addition to the above advantageous effect.

### [Brief Description of the Drawings]

[Fig. 1] Fig. 1 is a diagram illustrating an outline of an example embodiment.
[Fig. 2] Fig. 2 is a flowchart illustrating an operation of an example embodiment.
[Fig. 3] Fig. 3 is a diagram illustrating an example of a schematic configuration of an information processing system according to a first example embodiment.
[Fig. 4] Fig. 4 is a diagram illustrating an example of a configuration of an on-premises airport according to the first example embodiment.
[Fig. 5] Fig. 5 is a diagram illustrating an example of a configuration of a cloud-based airport according to the first example embodiment.
[Fig. 6] Fig. 6 is a diagram illustrating an example of a display of a terminal according to the first example embodiment.
[Fig. 7] Fig. 7 is a diagram illustrating an operation of the information processing system according to the first example embodiment.
[Fig. 8] Fig. 8 is a diagram illustrating the operation of the information processing system according to the first example embodiment.
[Fig. 9] Fig. 9 is a diagram illustrating an example of a processing configuration of a control server according to the first example embodiment.
[Fig. 10] Fig. 10 is a flowchart illustrating an example of an operation of a system registration control unit according to the first example embodiment.
[Fig. 11] Fig. 11 is a diagram illustrating an example of a processing configuration of a dedicated server according to the first example embodiment.
[Fig. 12] Fig. 12 is a diagram illustrating an example of a token management database according to the first example embodiment.
[Fig. 13] Fig. 13 is a diagram illustrating an example of a processing configuration of a shared server according to the first example embodiment.
[Fig. 14] Figs. 14A and 14B are diagrams illustrating an example of the token management database according to the first example embodiment.
[Fig. 15] Fig. 15 is a diagram illustrating an example of a processing configuration of an authentication terminal according to the first example embodiment.
[Fig. 16] Fig. 16 is a diagram illustrating an example of a processing configuration of a terminal according to the first example embodiment.
[Fig. 17] Fig. 17 is a sequence diagram showing an example of an operation of the information processing system according to the first example embodiment.
[Fig. 18] Figs. 18A, 18B, and 18C are diagrams illustrating the terminal according to a variation of the first example embodiment.
[Fig. 19] Fig. 19 is a diagram illustrating an example of a display of the terminal according to the variation of the first example embodiment.
[Fig. 20] Fig. 20 is a diagram illustrating an operation of the information processing system according to the variation of the first example embodiment.
[Fig. 21] Fig. 21 is a diagram illustrating an operation of the information processing system according to a second example embodiment.
[Fig. 22] Fig. 22 is a diagram illustrating an example of a token issuance history database according to a third example embodiment.
[Fig. 23] Fig. 23 is a diagram illustrating an example of a processing configuration of the dedicated server according to the third example embodiment.
[Fig. 24] Fig. 24 is a diagram illustrating an example of a processing configuration of the shared server according to the third example embodiment.
[Fig. 25] Fig. 25 is a diagram illustrating an example of a configuration of a hardware of the control server of the present application disclosed.

### [Example Embodiment]

First, an outline of an example embodiment will be described. In the following outline, various components are denoted by reference characters for the sake of convenience. That is, the following reference characters are used as examples to facilitate the understanding of the present invention. Thus, the description of the outline is not intended to impose any limitations. In addition, unless otherwise specified, an individual block illustrated in the drawings represents a configuration of a functional unit, not a hardware unit. An individual connection line between blocks in the drawings signifies both one-way and two-way directions. An arrow schematically illustrates a principal signal (data) flow and does not exclude bidirectionality. In the present description and drawings, elements that can be described in a like way will be denoted by a like reference character, and redundant description thereof will be omitted as needed.

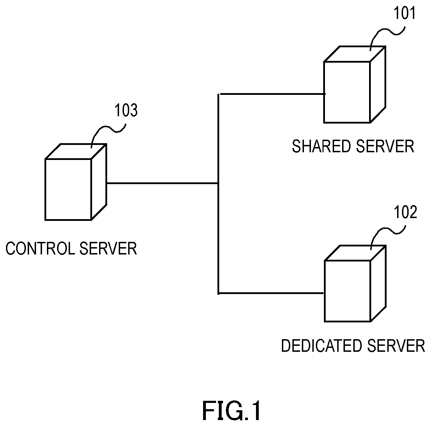

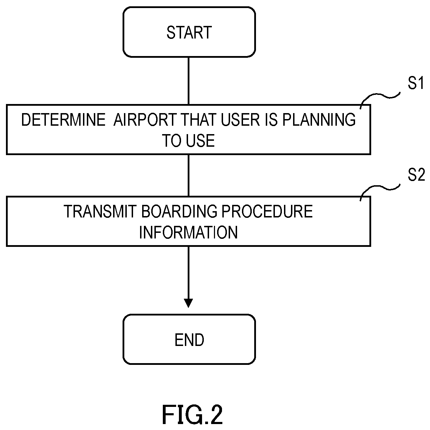

A system according to an example embodiment includes a shared server 101, a dedicated server 102, and a control server 103 (see Fig. 1). The shared server 101 is shared by a plurality of airports as a server that performs an authentication processing. The dedicated server 102 performs the authentication processing at a single airport. The control server 103 determines an airport that a user is planning to use (determine an airport that a user is planning to use; step S1 in Fig. 2). The control server 103 transmits information required for the user to proceed with boarding procedures using biometric authentication to either the shared server 101 or the dedicated server 102, depending on the airport that the user is planning to use (transmit boarding procedure information; step S2).

The above system includes the shared server 101, which is installed on a cloud, or the like and is shared by a plurality of airport companies, and so on, and the dedicated server 102, which is operated by an airport company, or the like, on its own. In a case where the user intends to proceed with boarding procedures using biometric authentication, the user is required to register information for proceeding with the boarding procedures at an airport using biometric authentication (boarding procedure information) in a server. At that time, the user only needs to transmit the boarding procedure information to the control server 103 without being aware of a scheme of the server adopted by the airport that the user is planning to use. This is because the control server 103 determines the airport that the user is using and provides the required information to the server (the shared server 101, the dedicated server 102) used by the airport. In other words, since the user is not required to be aware of the scheme of the server adopted by the airport that the user is planning to use, and so on, burden on the user does not increase. Furthermore, since the burden on the user does not increase, the airport company does not have a problem in using the shared server 101, which is built on the cloud, and so on.

Hereinafter, specific example embodiments will be described in more detail with reference to drawings.

### [First Example Embodiment]

A first example embodiment will be described in more detail with reference to drawings.

### [System Configuration]

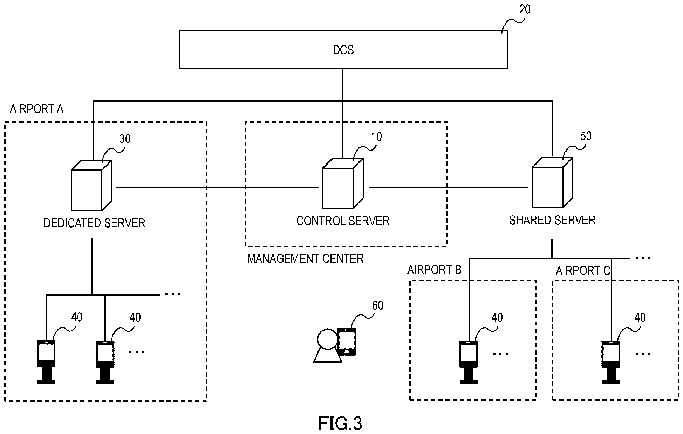

Fig. 3 is a diagram illustrating an example of a schematic configuration of an information processing system (airport management system, authentication system) according to the first example embodiment. The information processing system shown in Fig. 3 includes a management center and a plurality of Airports A to C.

The management center provides each airport with an identity verification platform (Biometrics Hub) that utilizes biometric authentication. The management center is operated by an arbitrary organization, and so on. For example, the management center may be operated by an airport company, a joint venture of a plurality of airport companies, a public organization such as a national or local government, or a private company, and so on, which is commissioned by an airport company or a public organization.

The management center includes a control server 10. The control server 10 is an apparatus that realizes the main function of the management center. The control server 10 may be installed within a facility of the management center, or may be installed in a cloud on a network.

A plurality of Airports A to C included in the information processing system are categorized into two types.

An airport belonging to the first type is an airport that manages and operates an apparatus and a piece of equipment required for proceeding with immigration procedures for a user (passenger) using biometric authentication within its own airport. **In** the example in Fig. 3, Airport A corresponds to the first type of airport. **In** the following description, the airport belonging to the first type will be referred to as an "on-premises airport".

The on-premises airport includes a dedicated server 30 that authenticates a user who proceeds with immigration procedures using biometric authentication, and an authentication terminal 40 (touch point) that serves as an interface for the user to proceed with immigration procedures using biometric authentication. The dedicated server 30 performs authentication processing at a single airport. A more detailed configuration of the on-premises airport will be described below.

An airport belonging to the second type is an airport that shares a server with another airport among the apparatuses required to proceed with immigration procedures for users using biometric authentication. In the example in Fig. 3, airports B and C correspond to the second type of airports. In the following description, the airport belonging to the second type will be referred to as a "cloud-based airport".

As described above, the cloud-based airport does not have a server that authenticates a user. The cloud-based airport includes at least one or more authentication terminal 40 (touch point). In the cloud-based airport, a shared server 50 installed on the cloud authenticates the user. The shared server 50 is shared by a plurality of airports as a server that performs an authentication processing. A more detailed configuration of a cloud-based airport will be described below.

In the following description, the dedicated server 30 and the shared server 50 are collectively referred to as an "authentication server".

As shown in Fig. 3, the information processing system includes a DCS (Departure Control System) 20. The DCS 20 is a system that manages a check-in processing, issuance of a boarding pass, and acceptance of baggage, and so on. The DCS 20 is composed of individual servers (airline host, DCS server) for each airline company. The DCS 20 is a collection consisting of a plurality of DCS servers. The DCS server of each airline company is configured to be accessible from the control server 10, the dedicated server 30, and the shared server 50.

A user possesses a terminal 60. The user performs procedures related to the use of an aircraft using the terminal 60. For example, the user operates the terminal 60 to purchase an airline ticket or perform a check-in procedure. An application related to the use of the aircraft is installed on the terminal 60. In the following description, the application installed on the terminal 60 is referred to as a "mobile app".

Each apparatus (the control server 10, the dedicated server 30, the shared server 50, and so on) included in the information processing system shown in Fig. 3 is configured to be capable of communicating with each other via a network. For example, the control server 10 and the dedicated server 30 are each connected by wired or wireless communication means so that the control server 10 and the dedicated server 30 can communicate with each other.

Fig. 3 is an example and is not intended to limit the configuration, and so on of the information providing system disclosed in the present application. For example, the management center may include two or more control servers 10. Moreover, the number of the airports included in the information processing system is not intended to be limited to "3". The information processing system may include at least one or more on-premises airports and at least one or more cloud-based airports

### [Configuration of On-Premises Airport]

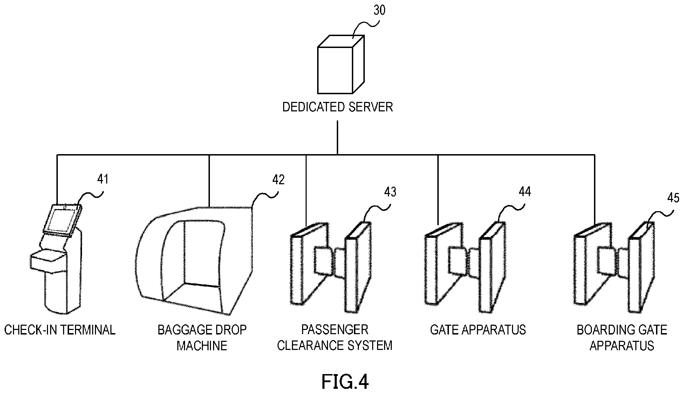

Fig. 4 is a diagram illustrating an example of a configuration of the on-premises airport. As shown in Fig. 4, the on-premises airport includes the dedicated server 30 and a plurality of touch points (an authentication terminal 40; a check-in terminal 41, a baggage drop machine 42, a passenger clearance system 43, a gate apparatus 44, and a boarding gate apparatus 45).

The boarding procedures for a user are carried out at each of the touch points shown in Fig. 4. Specifically, a series of procedures for the user to depart from the country are carried out sequentially at five touch points. The user can proceed with the boarding procedures using biometric authentication at the five touch points shown in Fig. 4.

In order to proceed with the boarding procedures (departure procedures) using biometric authentication, the user needs to register information required for biometric authentication in the system.

Note that the user can also proceed with the boarding procedures without using biometric authentication. In this case, the user completes the boarding procedures at a manned counter, booth, and so on. Since boarding procedures that do not use biometric authentication are different from the purpose of the present application disclosed, a detailed description will be omitted.

To board an aircraft, the user performs a check-in procedure. The user uses the check-in terminal 41 to perform the check-in procedure. Specifically, the user presents an airline ticket and a passport to the check-in terminal 41. After the check-in procedure is completed, the check-in terminal 41 issues a boarding pass. Note that the boarding pass includes both a paper boarding pass and an electronic boarding pass.

After the check-in procedure is completed, the user can perform the above-mentioned system registration (registering information required for biometric authentication in the system). The user performs the system registration using one of the touch points installed at the airport (for example, the check-in terminal 41, the baggage drop machine 42).

In the case where the system registration is performed, the touch point (the authentication terminal 40) acquires information related to a face image, a passport, and a boarding pass, respectively, and consent of the user for providing such information. The information acquired by the touch point is transmitted to the dedicated server 30 and the system registration is performed.

Note that the user can also perform the check-in procedure using the terminal 60 (the mobile app installed on the terminal 60). In addition, the user can also perform the system registration using the terminal 60 (the mobile app). The check-in procedure and system registration using the terminal 60 will be described below.

The check-in terminal 41 is installed in a check-in lobby in the airport. The check-in terminal 41 is also referred to as a CUSS (Common Use Self Service) terminal. After the user has completed the check-in procedure, the user moves to a baggage drop-off area or a security checkpoint.

The baggage drop machine 42 is installed in an area adjacent to a baggage counter (manned counter) in the airport or in the vicinity of the check-in terminal 41. The baggage drop machine 42 is a self-service terminal for the user to check in baggage that will not be carried on an aircraft (baggage check-in procedure). The baggage drop machine 42 is also referred to as a CUBD (Common Use Bag Drop) terminal. After completing the baggage check-in procedure, the user moves to the security checkpoint. Note that in the case where the user does not check baggage, the baggage check-in procedure is omitted.

The passenger clearance system 43 is a gate apparatus installed at an entrance of the security checkpoint in the airport. The passenger clearance system 43, also referred to as the PRS (Passenger Reconciliation System), is a system that determines whether or not the user can pass through the security checkpoint at the entrance of the security checkpoint. Once the user completes the security inspection procedure after passing through the passenger clearance system 43, the user moves to a departure inspection area.

The gate apparatus 44 is installed at the emigration inspection area in the airport. The gate apparatus 44 is an apparatus that automatically performs an emigration inspection for the user. After the user completes the emigration examination procedure, the registered person moves to a departure area where a duty-free store and boarding gate are located.

The boarding gate apparatus 45 is a passage control apparatus installed at each boarding gate in the departure area. The boarding gate apparatus 45 is also referred to as an ABG (Automated Boarding Gates) terminal. The boarding gate apparatus 45 checks that the user is a passenger of an aircraft that can board through the boarding gate. Once the user passes through the boarding gate apparatus 45, the user boards the aircraft and departs from the first country for the second country.

As shown in Fig. 4, at the on-premises airport, in principle, each procedure (departure procedure) in the airport is proceeded with using biometric authentication. However, at the on-premises airport, some of the five procedures may be proceeded using a procedure that differs from biometric authentication. For example, departure inspection may be conducted by an officer in charge of departure inspection.

### [Configuration of Cloud-based Airport]

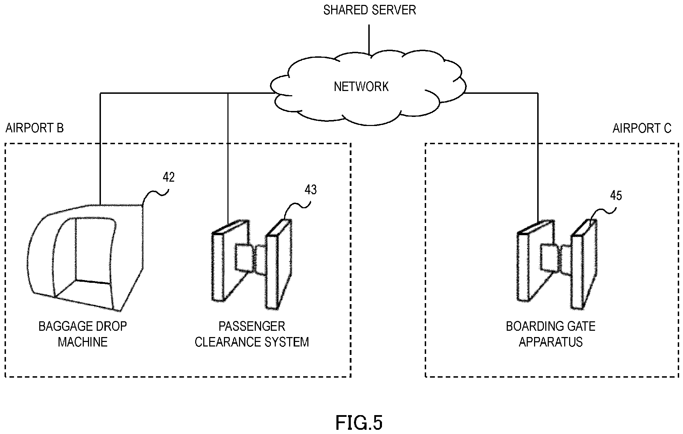

Fig. 5 is a diagram illustrating an example of a configuration of the cloud-based airport. As shown in Fig. 5, the cloud-based airport does not include a server corresponding to the dedicated server 30. In addition, some of the five touch points (the authentication terminal 40) required for the departure procedure of the user are installed in the cloud-based airport. The cloud-based airport selects the authentication terminal 40 that is suitable for the number of passengers and scale of its own airport and installs the authentication terminal 40 in the airport.

In the example in Fig. 5, the baggage drop machine 42 and the passenger clearance system 43 are installed at Airport B, and the boarding gate apparatus 45 is installed at Airport C. The authentication terminal 40 (touch point) included in the cloud-based airport is connected to the shared server 50 via a network

Note that even the cloud-based airport may include the five touch points required for the above departure procedure. Furthermore, even in the cloud-based airport, the system registration is required to proceed with the boarding procedures using biometric authentication.

Note that the configuration of the on-premises airport shown in Fig. 4 and the configuration of the cloud-based airport shown in Fig. 5 are only examples and are not intended to limit the configuration of each airport. A different type of terminal or device from the authentication terminal 40 shown in the figure may be installed at the on-premises airport and cloud-based airport. For example, a device that determines the presence or absence of an issued token (whether or not a procedure can proceed using biometric authentication) may be installed at the airport. Alternatively, a terminal for guidance (guidance signage) may be installed in the airport that provides the user with detailed information on boarding procedures and token issuance (system registration). Alternatively, a terminal that determines whether or not the user is permitted to enter a lounge operated by an airport company or a credit card information company may be installed in the airport. Furthermore, the user may use these terminals (the terminal that determines the presence or absence of a token, the guidance signage, and the terminal installed in the lounge) to perform the system registration.

### [Schematic Operation of System]

Next, a schematic operation of the information processing system will be described.

### <Advance preparation>

A user prepares in advance before making a reservation for an aircraft (purchasing an airline ticket). The user prepares in advance for using the aircraft by using the mobile app installed on the terminal 60. Specifically, the user registers biometric information and passport information to the terminal 60 in advance using the mobile app.

Note that examples of the biometric information include data (feature values) calculated from physical features unique to an individual, such as a face, a fingerprint, a voiceprint, a vein, a retina, or an iris pattern of an eye. Alternatively, the biometric information may be image data such as a face image, a fingerprint image, and so on. The biometric information may be anything that includes physical characteristics of a user as information. In the present application, a case in which biometric information about a "face" of a person (a face image or a feature value generated from the face image) is used will be described.

Passport information refers to all or part of information described on a face page of a passport. The passport information includes the face image of the user (hereinafter referred to as the passport face image), name, date of birth, address, gender, passport number, and so on.

With respect to acquiring biometric information, the user operates the terminal 60 to capture an image of his or her own face. The terminal 60 acquires the face image by a so-called selfie.

With respect to acquiring the passport information, the terminal 60 acquires the passport information by analyzing an image data acquired by photographing the passport. Alternatively, the terminal 60 acquires the passport information from an IC (Integrated Circuit) chip mounted on the passport.

Once biometric information (for example, face image) and passport information are obtained, terminal 60 (the mobile app) performs identity verification using the face image acquired by capturing an image of the user (hereinafter referred to as captured face image) and the passport face image acquired from the passport.

Specifically, the terminal 60 performs one-to-one authentication using the two face images. If the one-to-one authentication is successful, the terminal 60 determines that the advance preparation by the user is completed. **In** other words, if one-to-one authentication is not successful (if identity verification using the passport is not successful), the terminal 60 does not perform control related to the system registration via the mobile app (registration of information to proceed with a departure procedure using biometric authentication), and so on.

Once identity verification is successfully completed, the user purchases an airline ticket via a web page of a travel agency or airline company, and so on. For the user who has purchased the airline ticket, a paper airline ticket, a two-dimensional barcode containing boarding information, an e-ticket copy, and so on is issued. Moreover, the DCS server of the airline company stores the passport information of the airline ticket purchaser in association with reservation information (information on the airline ticket).

The terminal 60 acquires the airline ticket information (all or part of the information described on the airline ticket). For example, the terminal 60 acquires the ticket information by analyzing the image data acquired by capturing an image data of the airline ticket. Alternatively, the terminal 60 acquires the airline ticket information from the above two-dimensional barcode or e-ticket. The airline ticket information includes a departure airport, arrival airport, name of flight (flight number), airline code of the airline company operating the aircraft, and so on.

A predetermined time before the departure of the aircraft on which a reservation has been made (for example, 24 hours before), the DCS server notifies the airline ticket purchaser with regard to the check-in procedure. Specifically, the DCS server transmits a "check-in request" to an e-mail address of the airline ticket purchaser registered in advance.

Upon receiving the check-in request, the user operates the terminal 60 to perform a check-in procedure. For example, the user follows the guidance included in the e-mail received from the DCS server to perform the check-in procedure. The check-in procedure may be performed by the mobile app or may be performed by an application, and so on, provided by the airline company.

Once the check-in is completed, a boarding pass is issued to the user. The DCS server stores the passport and the boarding pass of the user who has completed the check-in process in association with each other.

### <Registration in advance>

Once the check-in is completed, the user is required to perform registration in advance (system registration) in order to proceed with the boarding procedures using biometric authentication. Specifically, the user needs to register in the system information required for the departure airport (on-premises airport, cloud-based airport) to perform biometric authentication.

As described above, the user can perform the system registration from the authentication terminal 40 (touch point) installed at the airport, but can also perform the system registration from the terminal 60 that the user possesses. The user performs system registration in order to proceed with the boarding procedures corresponding to the boarding pass for which check-in has been completed, using biometric authentication.

In the case where the user performs a procedure related to system registration using the terminal 60, the user operates the terminal 60 and launches the mobile app. The user performs a predetermined operation on the mobile app (for example, pressing a system registration button). In response to the operation by the user, the terminal 60 acquires consent from the user to provide information required to perform the biometric authentication described above to an external party.

Note that terminal 60 acquires the consent of the user to provide the above information in a method and manner that complies with rules and laws related to provision of personal information in the country in which the user is located.

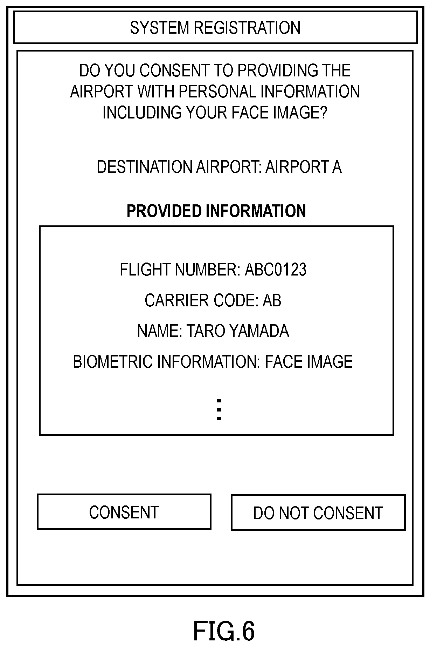

Specifically, the terminal 60 (the mobile app) generates a GUI (Graphical User Interface) as shown in Fig. 6, referring to the passport information and the airline ticket information. As shown in Fig. 6, the terminal 60 acquires the consent of the user to provide the information while clearly indicating the content of the information to be provided to an external party (biometric information in the example shown in Fig. 6) and the destination of the information (Airport A in the example shown in Fig. 6). Once the consent of the user to provide the information is acquired, the terminal 60 (the mobile app) generates "consent information" that includes the acquired consent details.

Note that the consent acquisition screen shown in Fig. 6 is merely an example, and the terminal 60 can acquire consent to provide the information while presenting various types of information to the user. For example, the terminal 60 may display the purpose of use and the application of use of the personal information (biometric information) to be provided to an external party. Alternatively, in the case where the biometric information to be provided to an external party is used to provide a service outside the airport, the terminal 60 may notify the user of the fact, while allowing the user to select a service (in cooperation with the airport company, and so on) that the user wishes to receive. That is, the terminal 60 may acquire the consent (consent of the user) for the personal information, such as biometric information, to be used outside the airport (off-airport). Further, in the case where the biometric information, and so on, is used outside the airport, the terminal 60 may present the user with the terms of use related to the use of the biometric information.

For example, consent information includes information related to the airport to which the information is to be provided, information related to the aircraft the user is scheduled to board (for example, flight number), information related to the airline company that operates the aircraft (for example, airline code), and personal information of the user (for example, biometric information, and so on). The consent information is information related to the consent of the user for information including biometric information to be provided to an external party (the shared server 50, the dedicated server 30) from the perspective of the terminal 60.

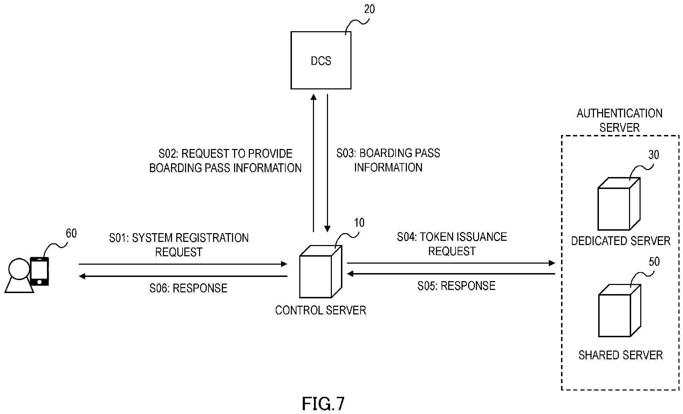

After that, the terminal 60 (the mobile app) transmits the biometric information, passport information, and consent information to the control server 10. Specifically, the terminal 60 transmits a "system registration request" including the biometric information, passport information, and consent information to the control server 10 (step S01 in Fig. 7).

Once the control server 10 receives the system registration request, the control server 10 transmits the passport information included in the system registration request to the DCS server. Specifically, the control server 10 identifies the airline company that operates the aircraft that the user is scheduled to board based on the consent information included in the system registration request. The control server 10 sends a "boarding pass information providing request" including the passport information to the DCS server of the identified airline company (step S02).

The DCS server attempts to identify a boarding pass that corresponds to the acquired passport information. If a corresponding boarding pass exists, the DCS server transmits a positive response to the control server 10 including the boarding pass information (step S03). If the boarding pass corresponding to the acquired passport information does not exist, the DCS server transmits a negative response indicating that fact to the control server 10.

After the control server 10 acquires the boarding pass information, the control server 10 requests the authentication server (the dedicated server 30, the shared server 50) to issue a token. Specifically, the control server 10 transmits four pieces of information (biometric information, passport information, boarding pass information, and consent information) required for issuing a token to the authentication server (the dedicated server 30, the shared server 50). The control server 10 transmits a "token issuance request" including the above four pieces of information to the authentication server (step S04).

Note that, in a case where the token issuance request is transmitted to the authentication server, the control server 10 determines the destination (the dedicated server 30 or the shared server 50) to transmit the token issuance request based on the consent information or the boarding pass information. Specifically, if the departure airport acquired from the consent information or the boarding pass information is the on-premises airport, the control server 10 transmits the token issuance request to the dedicated server 30 of the on-premises airport. If the departure airport acquired from the consent information, and so on, is the cloud-based airport, the control server 10 transmits the token issuance request to the shared server 50.

In the example in Fig. 3, in the case where a user boards an aircraft from Airport A, the biometric information, passport information, boarding pass information, and consent information are transmitted to the dedicated server 30 of Airport A. On the other hand, in the case where a user boards an aircraft from Airport B or Airport C, the above four pieces of information are transmitted to the shared server 50.

Note that in the case where the system registration is performed from the authentication terminal 40 (touch point) installed in the airport, the authentication terminal 40 acquires the above four pieces of information (biometric information, passport information, boarding pass information, and consent information). The authentication terminal 40 transmits a token issuance request to the authentication server including the acquired four pieces of information and a terminal ID, which will be described below.

### <Issuance of Token>

The authentication server (the dedicated server 30, the shared server 50) issues a token from the acquired four pieces of information. The authentication server registers the biometric information, passport information, boarding pass information, and consent information in association with each other in a token management database (issues a token). Note that the shared server 50 manages tokens using the token management database prepared for each airport.

After completing the token issuance process, the authentication server transmits a response (positive response, negative response) to the token issuance request to the control server 10 (step S05).

In response to receiving the response to the token issuance request, the control server 10 transmits a response (positive response, negative response) to the system registration request to the terminal 60 (step S06).

In the case where the positive response (system registration success, token issuance success) is received, the terminal 60 notifies the user where the user can proceed with the procedure in the airport using biometric authentication (so-called "face pass"). In the case where the negative response (system registration failure, token issuance failure) is received, the terminal 60 notifies the user that the system registration has failed.

### <Boarding Procedures Using Biometric Authentication>

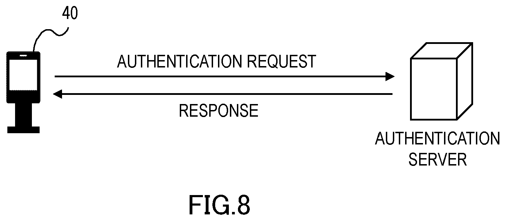

The user who has completed the system registration visits the airport on the boarding date. All or some of the procedures in the airport are performed using biometric authentication. In the procedure that supports biometric authentication, the user moves in front of the authentication terminal 40. The authentication terminal 40 acquires biometric information of the user (person to be authenticated) and transmits an authentication request including the acquired biometric information (for example, a face image) to the authentication server (see Fig. 8).

In the example of Fig. 3, the authentication terminal 40 installed at airport A transmits an authentication request to the dedicated server 30. The authentication terminal 40 installed at Airport B or Airport C transmits an authentication request to the shared server 50.

The authentication server (the dedicated server 30, the shared server 50) identifies the corresponding user (entry, token) by matching processing using the acquired biometric information and the biometric information stored in the token management database. The authentication server authenticates the user using the passport information and the boarding pass information of the identified token. The authentication server transmits the result of authentication (authentication success, authentication failure) to the authentication terminal 40. The authentication terminal 40 performs a processing (for example, allowing or denying the user to pass through a gate) in accordance with the result of authentication.

### <Deletion of Token>

The authentication server (the dedicated server 30, the shared server 50) deletes a token related to a passenger of an aircraft that has departed after a predetermined amount of time has elapsed since the aircraft departed.

Thus, the information processing system according to the first example embodiment includes the control server 10, the shared server 50, which is shared by a plurality of airports as a server that performs an authentication processing, and the dedicated server 30, which performs an authentication processing at one airport. The control server 10 transmits information required for the user to proceed with the boarding procedures using biometric authentication to the authentication server (the shared server 50, the dedicated server 30). The control server 10 transmits information required for the user to proceed with the boarding procedures using biometric authentication to either the shared server 50 or the dedicated server 30, depending on the airport that the user is planning to use.

Moreover, the authentication server (the dedicated server 30, the shared server 50) generates a token for the user to proceed with the boarding procedures using biometric authentication, by using the information acquired from the terminal 60 via the control server 10, and store the generated token. The authentication server deletes the token (biometric information, and so on of the user) used in the authentication processing at the timing when the token is no longer needed. Specifically, the shared server 50 or the dedicated server 30 deletes the token of the user after a predetermined amount of time has elapsed since the departure of the aircraft that the user boarded.

Next, details of the individual apparatuses included in the information processing system according to the first example embodiment will be described.

### [Control Server]

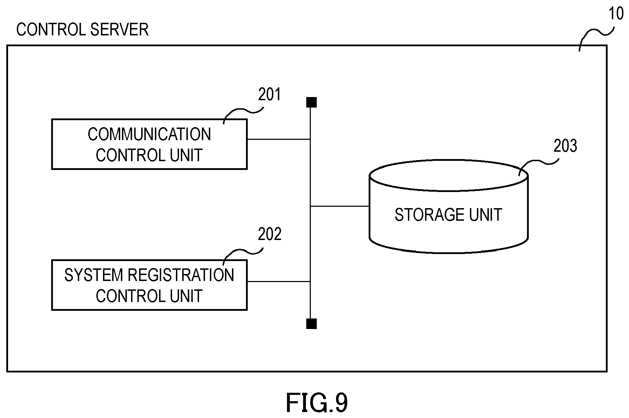

Fig. 9 is a diagram illustrating an example of a processing configuration (processing modules) of the control server 10 according to a first example embodiment. Referring to Fig. 9, the control server 10 includes a communication control unit 201, a system registration control unit 202, and a storage unit 203.

The communication control unit 201 is means for controlling communication with other apparatuses. For example, the communication control unit 201 receives data (packets) from the dedicated server 30. In addition, the communication control unit 201 transmits data to the dedicated server 30. The communication control unit 201 passes data received from other apparatuses to other processing modules. The communication control unit 201 transmits data acquired from other processing modules to other apparatuses. In this way, other processing modules transmit and receive data to and from other apparatuses via the communication control unit 201. The communication control unit 201 includes a function as a receiving unit that receives data from other apparatuses and a function as a transmitting unit that transmits data to other apparatuses.

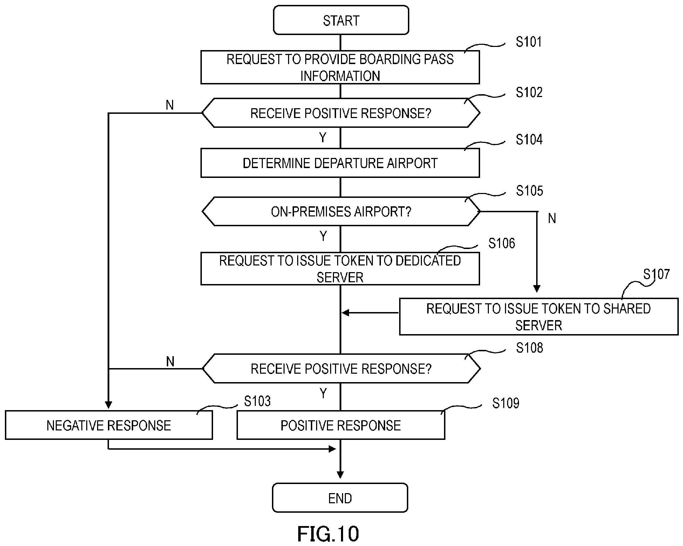

The system registration control unit 202 is means for controlling the system registration of a user. The system registration control unit 202 includes a function as a "determination unit" that determines the airport that the user is planning to use. Furthermore, the system registration control unit 202 includes a function as a "registration unit" that transmits information required for the user to proceed with the boarding procedures using biometric authentication to either the shared server 50 or the dedicated server 30, depending on the airport that the user is planning to use. The system registration control unit 202 processes a system registration request received from the terminal 60 (the mobile app). Referring to Fig. 10, the operation of the system registration control unit 202 will be described.

The system registration control unit 202 checks consent information included in the system registration request. The consent information includes information related to an airport where personal information is permitted to be provided, an aircraft to be boarded, an airline company to be used, and so on. The system registration control unit 202 refers to information related to the airline company (for example, airline code) to identify the airline company that the user uses.

The system registration control unit 202 transmits a boarding pass information providing request including passport information acquired from the system registration request to the DCS server of the identified airline company (step S101).

The system registration control unit 202 receives a response (positive response, negative response) from the DCS server of the airline company. A positive response transmitted from the DCS server includes boarding pass information.

In the case where a negative response is received (step S102, No branch), the system registration control unit 202 determines that a boarding pass of the user has not been registered in the DCS 20. In this case, the system registration control unit 202 transmits the negative response (system registration failure) to the terminal 60 as a response to the system registration request (step S103).

In the case where a positive response is received (step S102, Yes branch), the system registration control unit 202 retrieves the boarding pass information from the positive response. After that, the system registration control unit 202 makes a determination related to the departure airport that the user uses (step S104).

Specifically, the system registration control unit 202 determines whether the airport that the user is planning to use is the on-premises airport or the cloud-based airport based on information related to the airport (for example, airport code) that is included in the consent information.

The system registration control unit 202 transmits a token issuance request to the authentication server (the dedicated server 30, the shared server 50) at the identified airport.

Specifically, if the departure airport is the on-premises airport (step S105, Yes branch), the system registration control unit 202 transmits a token issuance request to the dedicated server 30 at the departure airport (step S106).

If the departure airport is the cloud-based airport (step S105, No branch), the system registration control unit 202 transmits a token issuance request to the shared server 50 (step S107).

Note that the token issuance request that the system registration control unit 202 transmits includes four pieces of information (biometric information, passport information, boarding pass information, and consent information) that are required for the authentication server to issue a token.

The system registration control unit 202 receives a response (positive response, negative response) to the token issuance request.

In the case where a negative response (token generation failure) is received (step S108, No branch), the system registration control unit 202 transmits a negative response to the terminal 60 indicating that the system registration has failed (step S103).

In the case where a positive response (token generation success) is received (step S108, Yes branch), system registration control unit 202 transmits a positive response to the terminal 60 indicating that system registration has been successful (step S109).

As described above, the consent information includes information related to the airport that the user is planning to use and information related to the airline company that operates the aircraft that the user is scheduled to board. The control server 10 transmits the passport information to the DCS server of the airline company corresponding to the information related to the airline company included in the consent information, thereby acquiring boarding pass information related to the boarding pass issued to the user. Moreover, the control server 10 determines a destination to which the token issuance request is transmitted based on the information related to the airport included in the consent information. The control server 10 transmits the token issuance request, which includes biometric information of the user, the passport information related to the passport of the user, the boarding pass information related to the boarding pass issued to the user, and the consent information, to the above determined destination (the authentication server).

The storage unit 203 stores information necessary for the operation of the control server 10. For example, the storage unit 203 stores the type of each airport (on-premises airport, cloud-based airport), an address of each authentication server, an address of the DCS server of each airline company, and so on.

### [DCS (DCS Server)]

A detailed description of the DCS 20 will be omitted. The DCS server included in the DCS 20 retains reservation information related to its own passengers (passengers of airline company) and issues a boarding pass to a user who has completed a check-in procedure. Furthermore, the DCS server processes a boarding pass information providing request received from the control server 10. If a boarding pass corresponding to the passport information included in the received boarding pass information providing request is stored, the DCS server transmits a positive response that includes the boarding pass information for the boarding pass to the control server 10.

### [Dedicated Server]

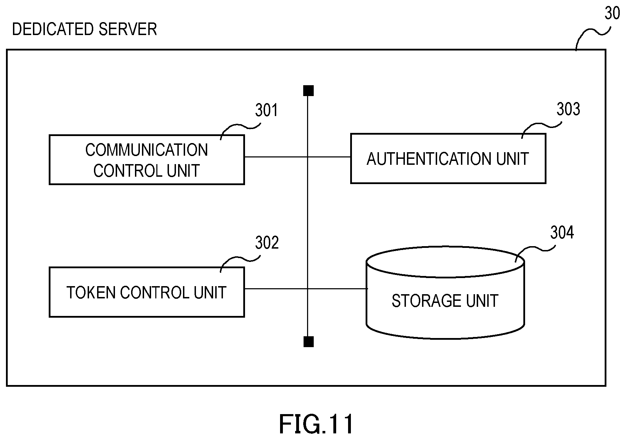

Fig. 11 is a diagram illustrating an example of a processing configuration (processing module) of the dedicated server 30 according to the first example embodiment. Referring to Fig. 11, the dedicated server 30 includes a communication control unit 301, a token control unit 302, an authentication unit 303, and a storage unit 304.

The communication control unit 301 is means for controlling communication with other apparatuses. For example, the communication control unit 301 receives data (packets) from the control server 10. Also, the communication control unit 301 transmits data toward the control server 10. The communication control unit 301 passes data received from other apparatuses to other processing modules. The communication control unit 301 transmits data acquired from other processing modules to other apparatuses. In this way, other processing modules transmit and receive data to and from other apparatuses via the communication control unit 301. The communication control unit 301 includes a function as a receiving unit that receives data from other apparatuses and a function as a transmitting unit that transmits data to other apparatuses.

The token control unit 302 is means for controlling a token of a user who proceeds with the boarding procedures using biometric authentication. The token control unit 302 receives a token issuance request from the authentication terminal 40 or the control server 10.

In response to receiving the token issuance request, the token control unit 302 issues a token. Specifically, the token control unit 302 generates a unique value as a token ID based on the date and time at the time of processing and a sequence number, and so on.

In addition, the token control unit 302 generates a feature value from the biometric information (face image) included in the token issuance request.

Note that since an existing technology can be used to generate the feature values, a detailed description thereof will be omitted. For example, the token control unit 302 extracts eyes, nose, mouth, and so on as feature points from the face image. After that, the token control unit 302 calculates the location of individual feature point and the distance between individual feature points as a feature value (generate a feature vector consisting of a plurality of feature values).

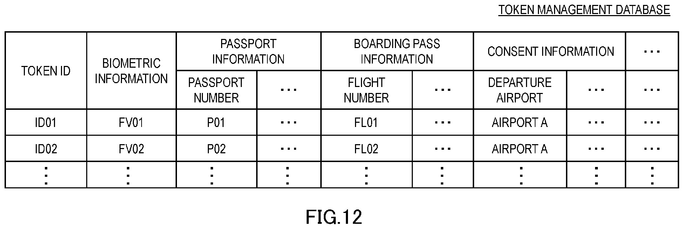

After the feature value is generated, the token control unit 302 stores the token ID, biometric information (feature value), passport information, boarding pass information, and consent information in association with each other in the token management database (see Fig. 12). Note that the token management database shown in Fig. 12 is an example and is not intended to limit the items to be stored. For example, a "face image" may be stored in the token management database as biometric information.

Once the token is generated (once the four pieces of information are registered in the database), the token control unit 302 transmits a positive response (token issuance success) to the transmission source of the token issuance request (the authentication terminal 40, the control server 10). If the token control unit 302 fails to generate the token ID, the token control unit 302 transmits a negative response (token issuance failure) to the transmission source of the token issuance request.

The token control unit 302 accesses the token management database periodically or at a predetermined timing. The token control unit 302 refers to boarding pass information, and so on, of each entry (token) in the database and deletes an entry for which a predetermined amount of time has elapsed since the aircraft departed (for example, 24 hours have elapsed). Alternatively, the token control unit 302 may acquire information related to the aircraft that has departed from the DCS 20.

The authentication unit 303 is means for authenticating a user (person to be authenticated) who proceeds with boarding procedures using biometric authentication. The authentication unit 303 processes an authentication request received from each authentication terminal 40 (touch point) installed at an airport.

The authentication request includes the biometric information of the person to be authenticated and a terminal ID. The terminal ID is an ID to identify the authentication terminal 40 installed at the airport. A MAC (Media Access Control) address or an IP (Internet Protocol) address of the authentication terminal 40 may be used for the terminal ID.

Note that the terminal ID may be shared between the authentication server and the authentication terminal 40 by any method. For example, a system administrator determines the terminal ID and sets the determined terminal ID and detailed information on the authentication terminal 40 (for example, the type of the authentication terminal 40, the airport where the authentication terminal 40 is installed, information on the airline company, and so on that manages the authentication terminal 40) on the authentication server. In addition, the system administrator sets the determined terminal ID to the authentication terminal 40.

The authentication unit 303 identify the type of the authentication terminal 40 (the check-in terminal 41, the baggage drop machine 42, the passenger clearance system 43, the gate apparatus 44, the boarding gate apparatus 45), which is the source of the authenticate request using the terminal ID.

The authentication unit 303 performs a matching processing (1-to-N matching; N is a positive integer, and the same applies to the following description) using biometric information included in the authentication request and the biometric information stored in the token management database.

The authentication unit 303 generates a feature value from a face image acquired from the authentication terminal. The authentication unit 303 sets the generated feature value (feature vector) as the feature value of matching side and feature value registered in the token management database as the feature values of the registration side, respectively.

The authentication unit 303 calculates a similarity between the feature value to be matched and each of the plurality of feature values on the registration side. Note that the chi-squared distance, the Euclidean distance, or the like can be used for the individual similarity. A longer distance represents a lower similarity, and a shorter distance represents a higher similarity.

The authentication unit 303 determines that the matching processing has been successful if there exists a feature value whose similarity between the feature value among the plurality of feature values registered in the token management database and the feature value of the object to be matched is greater than a predetermined value. If no such feature values exist, the authentication unit 303 determines that the matching processing failed.

If the matching processing fails, the authentication unit 303 transmits a negative response to the authentication terminal 40, indicating that the authentication of the person to be authenticated has failed.

If the matching processing is successful, the authentication unit 303 performs authentication of the person to be authenticated using passport information and boarding pass information of the entry corresponding to the feature value with the highest similarity. At that time, the authentication unit 303 authenticates the person to be authenticated by performing a processing in accordance with the type of the authentication terminal 40 identified from the terminal ID.

For example, in the case where an authentication request is received from the boarding gate apparatus 45 (ABG), the authentication unit 303 determines that the authentication is successful if the person to be authenticated is qualified to board an aircraft parked beyond the boarding gate. The authentication unit 303 determines that the authentication fails if the person to be authenticated is not qualified to board the aircraft.

Note that a detailed description of an authentication processing for each authentication terminal 40 will be omitted. This is because the authentication processing for each individual authentication terminal 40 is different from the purpose of the present application disclosed and is obvious to those skilled in the art.

The authentication unit 303 transmits the result of authentication to the authentication terminal 40 (responds to the authentication request). In the case where the authentication is successful, the authentication unit 303 transmits a positive response (a response indicating authentication success) to the authentication terminal 40. In the case where the authentication fails, the authentication unit 303 transmits a negative response indicating the fact (authentication failure) to the authentication terminal 40.

The storage unit 304 stores various information necessary for the operation of the dedicated server 30. The token management database is established in the storage unit 304.

### [Shared Server]

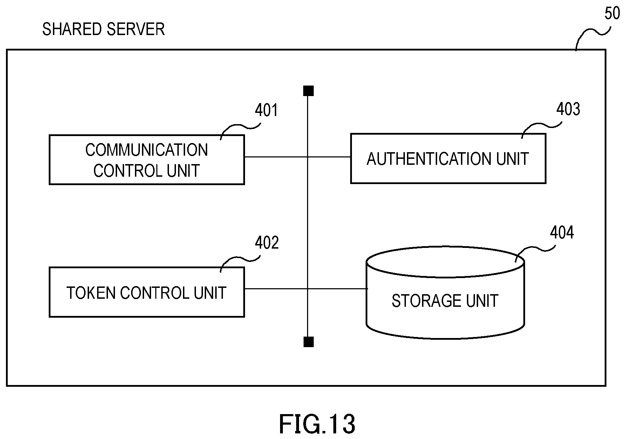

Fig. 13 is a diagram illustrating an example of a processing configuration (processing modules) of the shared server 50 according to the first example embodiment. Referring to Fig. 13, the shared server 50 includes a communication control unit 401, a token control unit 402, an authentication unit 403, and a storage unit 404.

The main function of the shared server 50 can be the same as that of the dedicated server 30. Therefore, the differences between the shared server 50 and the dedicated server 30 will be described.

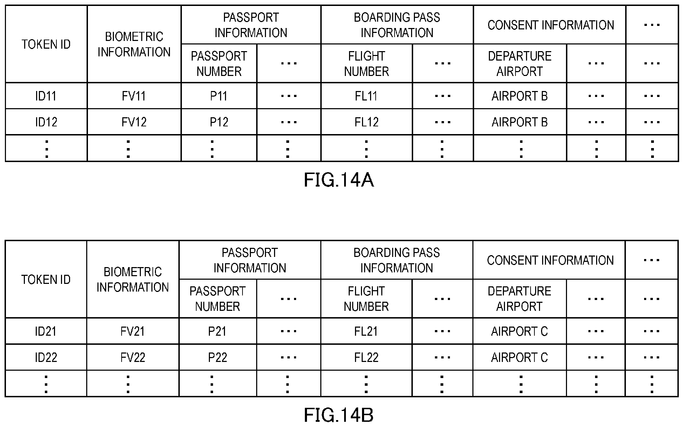

The token control unit 402 of the shared server 50 stores the generated token in a database for each airport. For example, the token for a user who is scheduled to board an aircraft from Airport B is stored in the token management database prepared for Airport B (see Fig. 14A). The token for a user who is scheduled to board an aircraft from Airport C is stored in the token management database prepared for Airport C (see Fig. 14B).

The authentication unit 403 of the shared server 50, in a case where an authentication request is processed, authenticates the person to be authenticated using the token management database corresponding to the airport where the authentication terminal 40 that transmitted the authentication request is installed.

For example, in the case where the authentication request is received from the authentication terminal 40 installed at Airport B, the authentication unit 403 performs an authentication processing using the biometric information in the token management database shown in Fig. 14A. Also, in the case where the authentication request is received from the authentication terminal 40 installed at Airport C, the authentication unit 403 performs an authentication processing using the biometric information in the token management database shown in Fig. 14B.

The authentication unit 403 may refer to table information, and so on, that stores the terminal IDs and airports, and so on where the authentication terminals 40 are installed in association with each other to identify the airport where the authentication terminal 40 is installed.

### [Authentication Terminal]

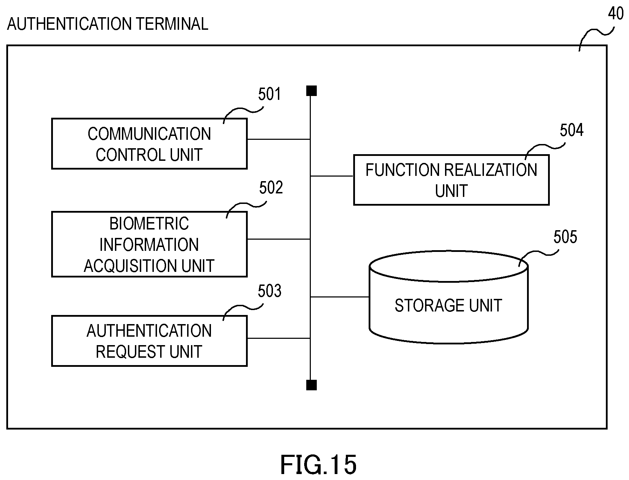

Fig. 15 is a diagram illustrating an example of a processing configuration (processing modules) of the authentication terminal 40 according to the first example embodiment. As illustrated on Fig. 15, the authentication terminal 40 includes a communication control unit 501, a biometric information acquisition unit 502, an authentication request unit 503, a function realization unit 504, and a storage unit 505.

The communication control unit 501 is means for controlling communication with other apparatuses. For example, the communication control unit 501 receives data (packets) from the dedicated server 30. Also, the communication control unit 501 transmits data toward the dedicated server 30. The communication control unit 501 passes data received from other apparatuses to other processing modules. The communication control unit 501 transmits data acquired from other processing modules to other apparatuses. In this way, other processing modules transmit and receive data to and from other apparatuses via the communication control unit 501. The communication control unit 501 includes a function as a receiving unit that receives data from other apparatuses and a function as a transmitting unit that transmits data to other apparatuses.

The biometric information acquisition unit 502 is means for controlling a camera (not shown) and acquiring biometric information of a user. The biometric information acquisition unit 502 captures an image of the area in front of its own apparatus periodically or at a predetermined timing. The biometric information acquisition unit 502 determines whether the acquired image includes a human face image or not, and in the case where a face image is included, the face image is extracted from the acquired image data.

An existing technique can be used for the face image detection and extraction processing performed by the biometric information acquisition unit 502, and therefore, detailed description thereof will be omitted. For example, the biometric information acquisition unit 502 may extract a face image (a face area) from the image data by using a learning model learned by a CNN (Convolutional Neural Network). Alternatively, the biometric information acquisition unit 502 may extract a face image by using a technique such as template matching.

The biometric information acquisition unit 502 passes the extracted face image to the authentication request unit 503.

The authentication request unit 503 is means for requesting an authentication related to a user in front of the authentication server. The authentication request unit 503 generates an authentication request that includes the acquired face image and terminal ID, and transmits the authentication request to the authentication server.

The authentication request unit 503 of the authentication terminal 40 installed at the on-premises airport transmits the authentication request to the corresponding dedicated server 30. The authentication request unit 503 of the authentication terminal 40 installed at the cloud-based airport transmits the authentication request to the shared server 50.

The authentication request unit 503 receives a response (positive response, negative response) to the authentication request from the authentication server. The authentication request unit 503 passes the received response to the function realization unit 504.

The function realization unit 504 is means for realizing a function assigned to each authentication terminal 40. For example, in the case where the authentication of the person to be authenticated is successful, the function realization unit 504 of the boarding gate apparatus 45 opens the gate and permits the person to be authenticated to pass through. On the other hand, in the case where the authentication of the person to be authenticated fails, the function realization unit 504 of the boarding gate apparatus 45 closes the gate and refuses the person to be authenticated to pass through.

A detailed description of an operation with respect to the function realization unit 504 of each authentication terminal 40 will be omitted. This is because the operation of each authentication terminal 40 is obvious to those skilled in the art and differs from the purpose of the present application disclosed.

The storage unit 505 is means for storing information necessary for an operation of the authentication terminal 40.

Note that the processing modules of the authentication terminal 40 related to the system registration (token issuance) of the user will be omitted in Fig. 15. The authentication terminal 40 only needs to perform the same procedure for the system registration in the same manner as the terminal 60. The authentication terminal 40 only needs to transmit a token issuance request to the authentication server including the four pieces of information that are required for token issuance.

### [Terminal]

Examples of the terminal 60 include a portable terminal device such as a smartphone, a portable phone, a game console, or a tablet and a computer (a personal computer or a laptop computer).

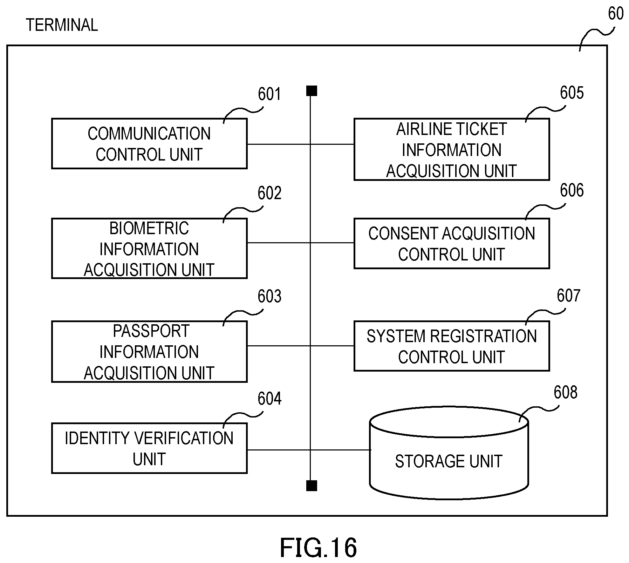

Fig. 16 is a diagram illustrating an example of a processing configuration (processing modules) of the terminal 60 according to the first example embodiment. Referring to Fig. 16, terminal 60 includes a communication control unit 601, a biometric information acquisition unit 602, a passport information acquisition unit 603, an identity verification unit 604, an airline ticket information acquisition unit 605, a consent acquisition control unit 606, a system registration control unit 607, and a storage unit 608.

The communication control unit 601 is means for controlling communication with other apparatuses. For example, the communication control unit 601 receives data (packets) from the control server 10. Also, the communication control unit 601 transmits data toward the control server 10. The communication control unit 601 passes data received from other apparatuses to other processing modules. The communication control unit 601 transmits data acquired from other processing modules to other apparatuses. In this way, other processing modules transmit and receive data to and from other apparatuses via the communication control unit 601. The communication control unit 601 includes a function as a receiving unit that receives data from other apparatuses and a function as a transmitting unit that transmits data to other apparatuses.

Note that the biometric information acquisition unit 602, the passport information acquisition unit 603, the identity verification unit 604, the airline ticket information acquisition unit 605, the consent acquisition control unit 606, and the system registration control unit 607 are processing modules that constitute the mobile app.

The biometric information acquisition unit 602 is means for acquiring biometric information of a user (for example, a face image). Once the biometric information acquisition unit 602 detects a predetermined operation by the user (for example, pressing a pre-preparation button), the biometric information acquisition unit 602 acquires biometric information of the user (for example, a face image) using a GUI, and so on.

Upon acquiring the face image, the biometric information acquisition unit 602 may utilize a technique for acquiring a face image suitable for biometric authentication. For example, the biometric information acquisition unit 602 may use a frontal face imaging technique to acquire a frontal face image, or a liveness detection imaging technique to prevent fraud using a photograph, and so on.

Upon acquiring the face image, the biometric information acquisition unit 602 notifies the passport information acquisition unit 603 of the fact.

The passport information acquisition unit 603 is means for acquiring passport information from a passport possessed by the user. Upon receiving notification that acquisition of a face image is complete, the passport information acquisition unit 603 acquires the passport information using a GUI, and so on.

For example, the user operates the terminal 60 and captures an image of a face page of a passport. The passport information acquisition unit 603 acquires a face image (passport face image) by extracting a face area from an image data acquired by capturing an image of the face page of the passport. The passport information acquisition unit 603 also uses OCR (Optical Character Recognition) technology, and acquires name, and so on described on the face page.

Alternatively, the passport information acquisition unit 603 may acquire passport information from an IC (Integrated Circuit) chip mounted on the passport. In the case where the information is acquired from the IC chip, the passport information acquisition unit 603 reads MRZ information described in a Machine Readable Zone (MRZ) on the face page of the passport. The MRZ information includes name, nationality, gender, date of birth, and so on. The passport information acquisition unit 603 uses the acquired MRZ information as a password to read the face image, name, and so on from the IC chip.

Upon acquiring the passport information, the passport information acquisition unit 603 notifies the identity verification unit 604 of the fact. Note that the terminal 60 may, of course, acquire biometric information (face image) after acquiring the passport information. In this case, the biometric information acquisition unit 602 acquires the face image (biometric information) after the passport information acquisition unit 603 acquires the passport information.

The identity verification unit 604 is means for performing identity verification of a user. Once biometric information and passport information are acquired, the identity verification unit 604 performs identity verification using a face image acquired by capturing an image of the user (captured face image) and a face image read from a passport (passport face image).

The identity verification unit 604 performs one-to-one authentication using the two face images. The identity verification unit 604 determines whether or not the two face images substantially match and performs identity verification.

Specifically, the identity verification unit 604 generates a feature value from each of the two images. The identity verification unit 604 calculates the similarity between the two feature values. If the similarity between the two feature values is greater than a predetermined value, the identity verification unit 604 determines that the two face images are of the same person (determines that identity verification is successful). If the similarity is equal to or less than the predetermined value, the identity verification unit 604 determines that the two face images are not of the same person (determines that identity verification fails).

Once identity verification (one-to-one authentication) is completed, the user can use each function of the mobile app.

The airline ticket information acquisition unit 605 is means for acquiring airline ticket information from a ticket purchased by the user. Once the airline ticket information acquisition unit 605 detects a predetermined operation by the user (for example, pressing an airline ticket registration button), the airline ticket information acquisition unit 605 displays a GUI, and so on, for acquiring the airline ticket information.

Note that the airline ticket information acquisition unit 605 acquires the airline ticket information from image data acquired by capturing an image of the airline ticket, in the same manner as acquiring the passport information. Alternatively, the airline ticket information acquisition unit 605 may acquire the airline ticket information from a web page (a server that provides a web page), and so on, through which the user purchased the airline ticket.

The consent acquisition control unit 606 is means for acquiring consent of the user to provide personal information, including biometric information, to an external party. More specifically, the consent acquisition control unit 606 acquires the consent of the user to provide information (for example, biometric information, passport information) to the boarding airport for proceeding with the boarding procedures using biometric authentication. The consent acquisition control unit 606 acquires the consent of the user to provide information to the boarding airport after identity verification has succeeded.

Once the check-in procedure for the purchased airline ticket is completed, the user presses the "system registration" button in the mobile app. In response to the pressing of the system registration button, the consent acquisition control unit 606 acquires the consent of the user to provide personal information required for system registration to an external party.

For example, the consent acquisition control unit 606 acquires the consent of the user for providing information using the GUI such as that shown in Fig. 6. Once the consent of the user for providing information is acquired, the consent acquisition control unit 606 generates "consent information" including the acquired consent details. After the consent acquisition control unit 606 generates the consent information, the consent acquisition control unit 606 notifies the system registration control unit 607 of the fact.

The system registration control unit 607 is means for performing control related to a system registration of the user. The system registration control unit 607 performs control for registration of information which has been acquired consent for providing information (information to proceed with the boarding procedures using biometric authentication) to an external party (boarding airport) to the authentication server.

Once the consent of the user for providing information is acquired (once the consent information is generated), the system registration control unit 607 transmits a "system registration request" to the control server 10 including the biometric information (face image), the passport information, and the consent information.

The system registration control unit 607 receives a response (positive response, negative response) to the system registration request from the control server 10. The system registration control unit 607 notifies the user whether the system registration of a system is acceptable or not (whether or not the boarding procedures can proceed using biometric authentication) in response to the received response.

In this way, the system registration control unit 607 transmits the system registration request including the biometric information, the passport information and the consent information to the control server 10. The control server 10 is a server connected to the authentication server and acquires boarding pass information related to the boarding pass issued to the user by transmitting the passport information to the DCS server of the airline company corresponding to information related to the airline company included in the consent information. In addition, to enable the control server 10 to acquire the boarding pass information, the consent acquisition control unit 606 generates the consent information, which includes at least information related to the airline company operating the aircraft the user is scheduled to board, once the consent to provide information is acquired from the user.

The storage unit 608 is means for storing information necessary for the operation of the terminal 60. The storage unit 608 stores information for proceeding with the boarding procedures at the airport using biometric authentication. For example, the biometric information of the user, the passport information, and the consent information, and so on, are stored in the storage unit 608.

### [System Operation]

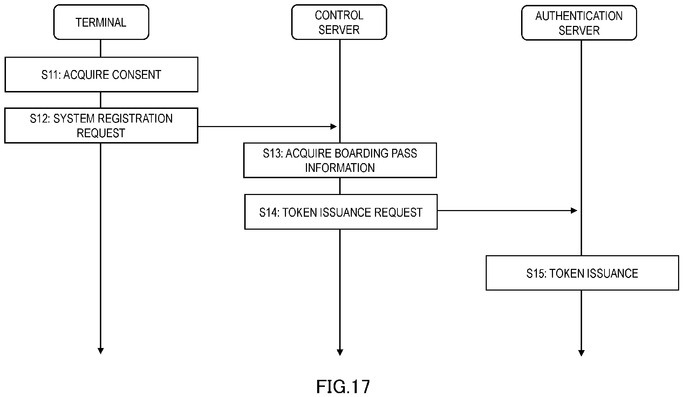

Next, operations of the information processing system according to the first example embodiment will be described. Fig. 17 is a sequence diagram illustrating an example of an operation in the information processing system according to the first example embodiment. With reference to Fig. 17, the operation related to system registration of a user will be described.

The terminal 60 acquires consent of a user to provide personal information such as biometric information, and so on to an external party in response to an operation by the user (step S11).

Once the terminal 60 acquires the consent of the user (generates consent information), the terminal 60 transmits a system registration request including biometric information, passport information, and consent information to the control server 10 (step S12).

In response to receiving the system registration request, the control server 10 transmits the passport information to the DCS 20 to acquire the corresponding boarding pass information (step S13).

After acquiring the boarding pass information, the control server 10 transmits a token issuance request including the biometric information, the passport information, the boarding pass information, and the consent information to the authentication server (step S14). In the case where the user uses the on-premises airport, the control server 10 transmits the token issuance request to the dedicated server 30. In the case where the user uses the cloud-based airport, the control server 10 transmits the token issuance request to the shared server 50.

The authentication server issues a token by registering the received four pieces of information in the token management database (step S15). In particular, the shared server 50 issues a token for the user in response to the token issuance request received from the control server 10, and stores the issued token in the token management database prepared for each of a plurality of airports.

Next, variations according to the first example embodiment will be described.

### <Variation 1 according to the first example embodiment>

In the first example embodiment above, the case in which the control server 10 acquires boarding pass information from the DCS 20 is described. However, the terminal 60 may acquire the boarding pass information from the DCS 20. Specifically, the system registration control unit 607 of the terminal 60 may acquire the boarding pass information by transmitting passport information to a DCS server of an airline company, which is acquired from airline ticket information.

In this case, the system registration control unit 607 transmits a system registration request including biometric information, passport information, boarding pass information, and consent information to the control server 10. The control server 10 identifies the airport that a user is planning to use based on the consent information or boarding pass information. The control server 10 transmits a token issuance request to the authentication server (the dedicated server 30, the shared server 50) in accordance with the identified airport.

Alternatively, the terminal 60 (mobile app) may acquire the boarding pass information by capturing an image of the boarding pass issued from the check-in terminal 41, and so on. In this case, once consent of a user for providing information is acquired, the system registration control unit 607 captures an image of the boarding pass in accordance with an operation by the user. The system registration control unit 607 generates (extracts) the boarding pass information from the image data acquired by capturing an image of the boarding pass. After that, the system registration control unit 607 transmits a system registration request including the biometric information, the passport information, the boarding pass information, and the consent information to the control server 10. Alternatively, the terminal 60 may acquire the boarding pass information from a two-dimensional barcode described on the boarding pass. In other words, the terminal 60 may include a function of reading the barcode described on the boarding pass.

Alternatively, the boarding pass information acquired by an application that is different from the mobile app may be transmitted to the control server 10.

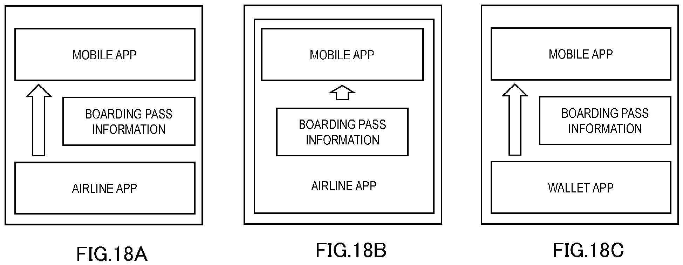

For example, as shown in Fig. 18A, the mobile app (the system registration control unit 607) may acquire the boarding pass information from an airline app provided to the user by an airline company. The user completes a check-in procedure using the airline app. Upon completion of the check-in procedure, the airline app acquires the boarding pass information from the DCS server. The airline app passes the acquired boarding pass information to the mobile app. The system registration control unit 607 of the terminal 60 transmits a token issuing request that includes the acquired boarding pass information to the control server 10.

Alternatively, as shown in Fig. 18B, a function of the mobile app may be implemented in the airline app. In this case, as well, the system registration control unit 607 transmits a system registration request including the acquired boarding pass information to the control server 10.

Alternatively, as shown in Fig. 18C, the mobile app may acquire the boarding pass information from a wallet app that manages a credit card, a transportation IC card, a concert ticket, and so on. In this way, the mobile app may acquire the boarding pass information in cooperation with an application of another company.

In this way, the system registration control unit 607 may acquire the boarding pass information by transmitting the passport information to the DCS server of the airline company operating the aircraft on which the user is boarding. In that case, the system registration control unit 607 may transmit a system registration request including the biometric information, the passport information, the boarding pass information, and the consent information to the control server 10 connected to the authentication server.

### <Variation 2 according to the first example embodiment>

In the first example embodiment above, it is assumed that a subject of acquiring consent from a user is providing information related to boarding procedures corresponding to a single boarding pass for which the check-in procedure is complete. However, depending on the timing of boarding an aircraft, the boarding procedures corresponding to a plurality of boarding passes may be the subject of acquiring consent.

For example, the boarding procedures for traveling from a first country to a second country and the boarding procedures for traveling from a second country to a third country may each be subject to system registration (providing information to an airport, and so on). In this case, the consent acquisition control unit 606 of the terminal 60 may display a plurality of boarding procedures (airline tickets) that are subject to acquiring consent, and allow the user to select the procedure for which consent is to be given.

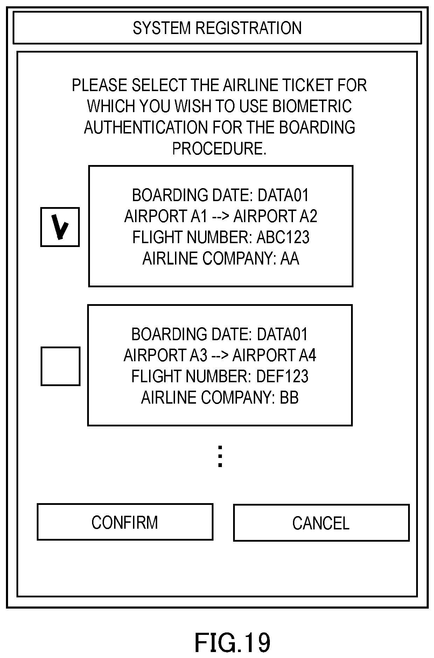

For example, the consent acquisition control unit 606 may display a list of procedures (airline tickets) that are subject to acquiring consent, as shown in Fig. 19, and allow the user to select the subject to which consent to provide information is to be given from among the airline tickets displayed in the list.

The consent acquisition control unit 606 acquires the subject procedure for which consent is to be acquired using a GUI such as the one shown in Fig. 19. The consent acquisition control unit 606 acquires the consent of the user using a GUI such as the one shown in Fig. 6 with regard to the acquired subject procedure. The system registration control unit 607 may request system registration with regard to the airline ticket (boarding procedures) selected by the user to the control server 10.

With such a configuration of the terminal 60, the user can individually determine whether or not to provide personal information, taking into account the details of the flight (the airport to which information is provided and the airline company that is being used). For example, in Fig. 19, in the case where the user has concerns about management of information, and so on, for Airport A3, which the user is planning to use for the flight in the lower row, the user can select to refuse to provide information related to the flight.

### <Variation 3 according to the first example embodiment>

The management center (the control server 10) may receive a system registration request not only from the terminal 60 of a user, but also from another management center. Alternatively, the management center (the control server 10) may transmit a system registration request received from the terminal 60 of the user to another management center.

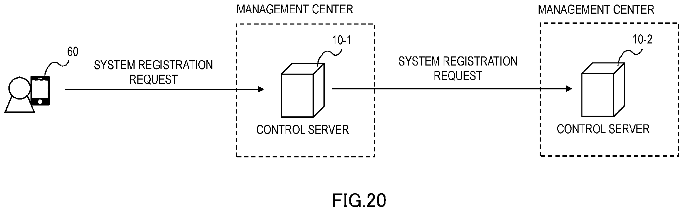

For example, as shown in Fig. 20, a system registration request may be transmitted from a control server 10-1 of a first identity verification platform (Biometrics Hub) to a control server 10-2 of a second identity verification platform.

In this case, in the case where the system registration control unit 202 of the control server 10-1 determines that the system registration request received from the terminal 60 is not addressed to an airport managed by its own system, the system registration control unit 202 of the control server 10-1 transmits (forwards) the system registration request to another control server 10-2 connected to its own system.

In the case where the system registration control unit 202 that has received the system registration request from another control server 10 determines that the system registration request is addressed to an airport included in its own system, the system registration control unit 202 transmits a token issuance request to the authentication server as described above.

In this way, in the case where the control server 10 receives a system registration request (a request including the 4 required information for generating a token) from another system, the control server 10 may transmit a token issuance request to the authentication server for an airport managed by its own system. In other words, the control server 10 may transmit a token issuance request to the shared server 50 or the dedicated server 30 in response to the system registration request received from another system.

### <Variation 4 according to the first example embodiment>

Regulations, laws, and so on related to external provision of personal information differ depending on the country. As a general principle, laws, and so on related to provision of information are determined based on the country in which the user is located. For example, in the case where the user is located in Country A, the law that applies in providing information to an external party from the terminal 60 is the law of Country A. In other words, in the case where a user who is staying in Country B is planning to use an airport in Country A, the law applicable to the provision of information concerning the user staying in Country B is the law of Country B.

Here, in the case where the law, and so on related to the provision of personal information in Country B prohibits providing personal information to other countries, the terminal 60 of the user who is staying in Country B above cannot provide personal information of the user to an external party, and the control server 10 cannot acquire the personal information of the user.

Therefore, the terminal 60 (the mobile app) and/or the control server 10 performs control to comply with the law, and so on, of the country in which the user is located.

Specifically, the consent acquisition control unit 606 of the terminal 60 acquires location information of its own apparatus using GPS (Global Positioning System), and so on. The consent acquisition control unit 606 notifies the user that system registration is not possible (that providing information for biometric authentication is not possible) in the case where the country where the airport that the user is planning to use is different from the country in which the user is located.

Alternatively, the consent acquisition control unit 606 may store whether or not personal information can be provided to an external party for each country, and in the case where it is determined that system registration (provision of personal information to an external party) violates the law, and so on, of the country in which the user is located, the consent acquisition control unit 606 may notify the user that the above system registration is not possible.

In this way, the consent acquisition control unit 606 of the terminal 60 (the mobile app) does not acquire consent of the user to provide information to an external party for proceeding with boarding procedures using biometric information in the case where the country in which the user is located is different from the country in which the airport that the user is planning to use is located.

In addition, the system registration control unit 202 of the control server 10 may determine the country in which the user is located based on the IP address of the terminal 60, and so on. In the case where it is determined that the user is staying in a country different from the country in which the airport that the user is planning to use is located, the system registration control unit 202 may reject the system registration request of the user. Alternatively, the system registration control unit 202 may use a list that describes whether or not a system registration request is accepted for each country.

By appropriately updating the above list for each country or updating the version of the mobile app, both compliance with the law related to the provision of personal information and improvement of user convenience are realized.

As described above, the terminal 60 according to the first example embodiment acquires and stores internally the biometric information, the passport information, and the consent information, which are the information required to issue a token (the information required to proceed with the boarding procedures using biometric authentication). The terminal 60 transmits the above information to the control server 10 before the boarding procedures at the airport. The control server 10 acquires the boarding pass information based on the passport information and the consent information. The control server 10 transmits the biometric information, the passport information, the boarding pass information, and the consent information to the authentication server. The authentication server (the dedicated server 30, the shared server 50) generates a token using these four pieces of information and stores the four pieces of information in the token management database. The shared server 50 deletes the token consisting of the above four pieces of information after the boarding procedures of the user is completed (after the aircraft departs). As a result, the authentication server only needs to store the biometric information, the passport information of the user, and so on for the minimum necessary period of time, whereby burden of managing personal information is reduced. That is, the personal information, such as biometric information becomes valid only during a period in which the personal information is used, and the information is deleted in a case where the use of the information is terminated. In other words, during a period in which the system does not require the personal information (biometric information, and so on), the personal information is not retained by a central server (the authentication server). Furthermore, by storing the consent information, the authentication server can store the personal information such as biometric information with the explicit consent of the user. In addition, since the number of entries (number of tokens) in the talk management database established in the authentication server is reduced, accuracy of authentication is improved.

Furthermore, the user can perform various operations and procedures related to the user of the aircraft by using the mobile app installed on the terminal 60. By registering in advance the required information on the terminal 60 in his or her possession, the user can register information for boarding procedures (boarding procedure information) with the system on the day of use of the aircraft with a simple operation. The mobile app includes a function to acquire and manage a token (biometric information, passport information, consent information, and so on) required for a procedure using biometric authentication. The mobile app includes a biometric information management function, a passport information management function, a boarding pass information (airline ticket information) management function, and so on.

Furthermore, the control server 10 transmits the information required to generate a token (face image, passport information, boarding pass information, and consent information) to the authentication server (the dedicated server 30, the shared server 50). Here, even if an airport is unable to prepare a server (the dedicated server 30) for biometric authentication on its own, the airport can provide boarding procedures using biometric authentication to the user by utilizing the shared server 50. The airport company can easily and at low cost establish a biometric authentication system simply by installing the authentication terminal 40 in the airport that meets its own needs. Also, in the case where the system includes an airport that already supports the biometric authentication system, the control server 10 transmits information required for token generation to the dedicated server 30 of the airport. By changing the destination for transmitting the information required for token generation in accordance with the airport that the user is planning to use, the control server 10 enables coexistence of an airport that already supports the biometric authentication system and an airport that newly supports the biometric authentication system.

### [Second Example Embodiment]

Next, a second example embodiment will be described in detail with reference to drawings.

In the second example embodiment, a token update will be described in the case where a seat is changed (boarding pass information is changed) at the departure airport after a user performs system registration using the mobile app.

As the information processing system according to the second example embodiment can have the same configuration as that according to the first example embodiment, the description corresponding to Fig. 3 will be omitted.

The following description will be made with a focus on the difference between the first example embodiment and the second example embodiment.

A user who has been informed by a staff member of an airline company that a seat change has been made for the aircraft the user is about to board operates the terminal 60 to update the token (information registered in the system).

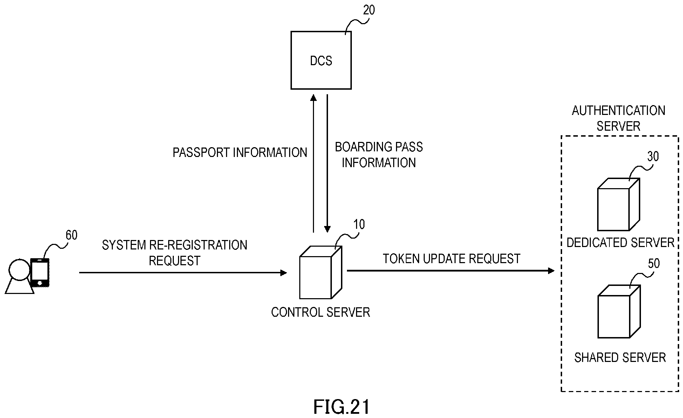

For example, the user performs a predetermined operation on the mobile app (for example, pressing a seat change button). In response to the operation, the system registration control unit 607 of the terminal 60 transmits a "system re-registration request" to the control server 10, which includes at least the passport information and the consent information that was transmitted immediately before (see Fig. 21).

Upon receiving the system re-registration request, the system registration control unit 202 of the control server 10 acquires boarding pass information by transmitting the passport information included in the system re-registration request to the DCS server of the airline company that the user is planning to use.

The acquired boarding pass information reflects the seat change that has already been made. The control server 10 transmits a "token update request" to the authentication server, including at least the reacquired boarding pass information and passport information.

The token control unit 302 of the dedicated server 30 and the token control unit 402 of the shared server 50 identify the target person (entry, token) whose token is to be updated from the passport information included in a token update request. The token control unit 302, and so on, replaces the boarding pass information of the identified token with the boarding pass information included in the token update request.

In this way, the system registration control unit 607 of the terminal 60 transmits a system re-registration request, which includes passport information and consent information, to the control server 10 in the case where the boarding pass issued to a user has been changed. The control server 10 transmits the passport information included in the system re-registration request to the DCS server of the airline company corresponding to information related to the airline company included in the consent information, thereby acquiring the boarding pass information related to the changed boarding pass. The control server 10 transmits a token update request including the acquired changed boarding pass information and passport information to the authentication server.

### <Variation according to the second example embodiment>

In a case where a seat change has been made, the DCS server may transmit the boarding pass (boarding pass information) and passport information after the seat change to the control server 10 or the authentication server.

Specifically, the DCS server may transmit a token update request, which includes the boarding pass information after the seat change and the passport information, to the control server 10. In this case, the control server 10 identifies the authentication server (the dedicated server 30, the shared server 50) that holds the token to be updated based on the boarding pass information. The control server 10 can transmit the token update request including the above changed boarding pass information and the passport information to the identified authentication server.

Alternatively, the DCS server may transmit the token update request including the boarding pass information after the seat change and passport information directly to the authentication server.

In this way, the token of the authentication server may be updated by transmitting the boarding pass information after the seat change from the DCS 20 to the authentication server, or the token may be updated by the user performing a token reissue (token update) procedure on the mobile app.

As described above, the information processing system according to the second example embodiment accommodates the seat change made by the airline company. By accommodating the seat change, the user can continue to proceed with the boarding procedures using biometric authentication.

### [Third Example Embodiment]

Next, a third example embodiment will be described in detail with reference to drawings.

In the third example embodiment, a case will be described in which the authentication server stores a history related to token issuance, and where the history of token issuance is provided to an airline company, and so on.

As the information processing system according to the third example embodiment can have the same configuration as that according to the first example embodiment, the description corresponding to Fig. 3 will be omitted.

The following description will be made with a focus on the difference from the first example embodiment to the third example embodiment.

The control server 10 according to the third example embodiment, in a case where a token generation request is transmitted to the authentication server, notifies the authentication server that the transmission of the token generation request is due to receiving a system registration request from the mobile app.

For example, the control server 10 (the system registration control unit 202) regards the mobile app as a virtual touch point and assigns a virtual ID to the mobile app. Specifically, the system registration control unit 202 transmits a token issuance request including the virtual ID (hereinafter referred to as a virtual terminal ID) assigned to the above mobile app to the authentication server, along with the four pieces of information included in the received system registration request.

Note that the virtual terminal ID is set for each airline company. For example, even if the system registration request is received from the mobile app on the same terminal 60, the virtual terminal ID included in the token issuance request addressed to Airline Company A and the virtual terminal ID included in the token issuance request addressed to Airline Company B are different.

Here, as described above, a user may also perform system registration from the authentication terminal 40 (touch point). At that time, the authentication terminal 40 transmits the terminal ID to the authentication server along with the four pieces of information required for token issuance (biometric authentication, passport information, boarding pass information, and consent information).

The authentication server can grasp the airline company for which the token is to be issued by using the ID (terminal ID, virtual terminal ID) included in the token issuance request.

The token control unit 302 of the dedicated server 30 and the token control unit 402 of the shared server 50, upon receiving a token issuance request and issuing a token accordingly, store a history of the token issuance in a database.

Specifically, token control unit 202, and so on, identifies the airline company for which token issuance is requested and the transmission source of the token issuance request (touch point, mobile app that transmitted the system registration request) based on the ID (terminal ID, virtual terminal ID) included in the token issuance request.

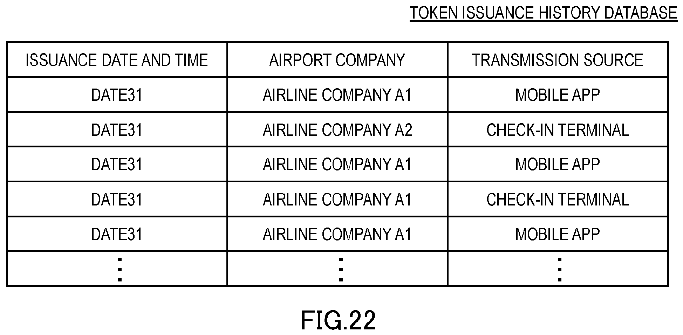

The token control unit 302 stores the date and time the token was issued, the airline company identified above, and the transmission source in a token issuance history database (see Fig. 22). Note that the token issuance history database shown in Fig. 22 is an example and is not intended to limit the items to be stored, and so on.

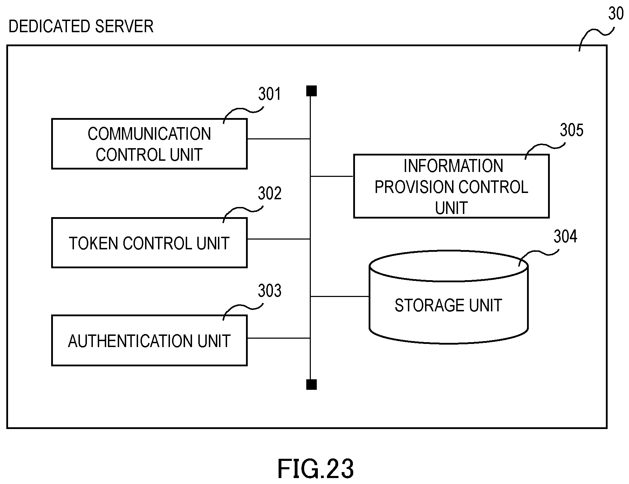

Fig. 23 is a diagram for illustrating an example of a processing configuration (processing modules) of the dedicated server 30 according to the third example embodiment. Referring to Fig. 23, an information provision control unit 305 is added to the configuration of the dedicated server 30 according to the first example embodiment.

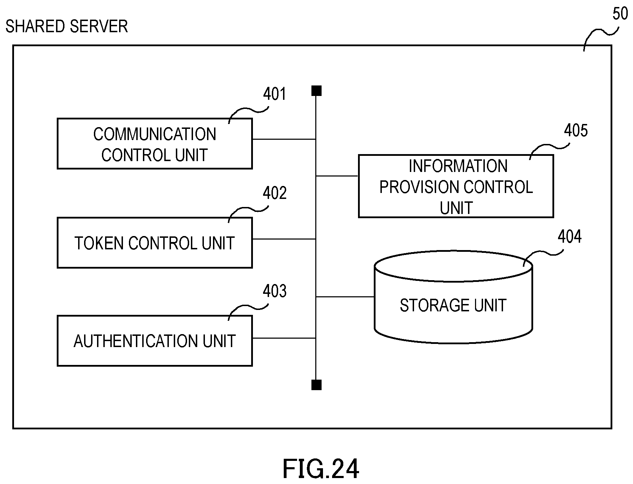

Fig. 24 is a diagram for illustrating an example of a processing configuration (processing modules) of the shared server 50 according to the third example embodiment. Referring to Fig. 24, an information provision control unit 405 is added to the configuration of the shared server 50 according to the first example embodiment.

The operation of the information provision control unit 305 and the information provision control unit 405 can be the same. The information provision control unit 305, and so on is means for performing control of providing information of the authentication server to an external party.

For example, the information provision control unit 305, and so on provides information related to the token issuance history in response to a request by a staff member of an airline company, or the like. For example, in the example of Fig. 22, in the case where a request is made to provide the token issuance history of Airline Company A1, the information provision control unit 305 extracts the entries in rows 1, 3 to 5 of the token issuance history database shown in Fig. 22, and provides the extracted entries to Airline Company A1.

The airline company that receives the information can calculate the token issuance rate from the touch points installed at the airport, the token issuance rate from the mobile app, and so on. For example, in the above example, the token issuance rate from the mobile app is calculated to be 75% (3/4).

Note that the information provision control unit 305 may provide an interface to the airline company, and so on, that enables the airline company to input information required by the airline company. For example, the information provision control unit 305 may provide an interface that enables a staff member of the airline company, or the like, to specify the period of time from which the token issuance history is to be extracted. Furthermore, the information provision control unit 305 may transmit the token issuance history to a server of the airline company or to a terminal operated by the staff member.

In this way, each of the shared server 50 and the dedicated server 30 issues a token in response to receiving a token issuance request from a touch point installed at the airport. The token issuance request transmitted from the touch point includes a terminal ID that identifies the touch point. Furthermore, in a case where the control server 10 receives a system registration request from the terminal 60, the control server 10 assigns a virtual terminal ID to the terminal 60 (mobile terminal) and transmits a token issuance request, which includes the virtual terminal ID, to the shared server 50 or the dedicated server 30. The shared server 50 or the dedicated server 30 generates a token issuance history including the transmission source of the token issuance request based on the terminal ID and the virtual terminal ID. The shared server 50 or the dedicated server 30 provides information related to the generated token issuance history.

### <Variation 1 according to the third example embodiment>

The authentication server may store attribute information (for example, age, gender, nationality, and so on) of a user who has requested a token issuance in the token issuance history database as shown in Fig. 22. In addition, the information provision control unit 305 may generate information to be provided to an airline company, and so on, using the attribute information of the user stored in the token issuance history database. For example, the information provision control unit 305 may calculate the token issuance rate using the mobile app for each attribute (age, gender, nationality, and so on).

### <Variation 2 according to the third example embodiment>

The information provision control unit 305, and so on, may enable a staff of an airport company, or the like, to view information acquired from the token management database. That is, the information provision control unit 305 may provide a dashboard function to the airport company.

### <Variation 3 according to the third example embodiment>

In order to increase the rate of token generation by the mobile app, a reward may be provided to a user who has completed system registration on the mobile app. For example, a predetermined number of mileage points may be assigned to the user who has completed system registration using the mobile app. As a result, system registration using the mobile app is promoted so that the number of check-in terminals 41, and so on, installed can be reduced. In other words, increasing the number of users who use the mobile app will realize cost reductions for the airline company, and so on.

As described above, the information processing system according to the third example embodiment provides information related to token generation. In particular, the authentication server provides information related to the source of token issuance (touch point, mobile app) to an airline company, and so on. Here, the airline company, and so on, aims to make more active use of biometric authentication. However, the airline company, and so on hesitates to install a large number of token generation apparatuses at airports from the perspective of cost. Therefore, the airline company hopes to use the mobile app for system registration, and considers an initiative, and so on to improve the token generation rate (biometric authentication usage rate) using the mobile app. In order to grasp the results of this initiative, there is a need for the airline company to grasp the token generation rate using the mobile app. The control server 10 makes it possible to distinguish the source of request for token issuance by setting a virtual terminal ID in a token generation request from the mobile app, thereby making it possible to calculate the token generation rate by the mobile app.

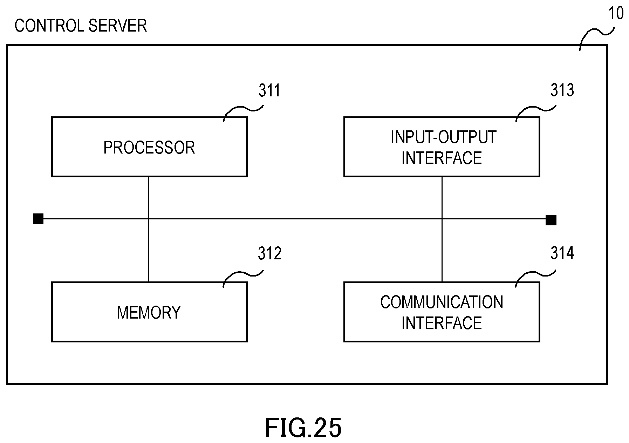

Next, a hardware configuration of an individual apparatus that constitutes the information processing system will be described. Fig. 25 is a diagram illustrating an example of a hardware configuration of the control server 10.

The control server 10 can be configured by an information processing apparatus (a so-called computer) and has a configuration illustrated as an example in Fig. 25. For example, the control server 10 includes a processor 311, a memory 312, an input-output interface 313, a communication interface 314, and so on. The components such as the processor 311 are connected to an internal bus, and so on so that these components can communicate with each other.

The hardware configuration of the control server 10 is not limited to the configuration illustrated in Fig. 25. The control server 10 may include hardware not illustrated or may be configured without the input-output interface 313 if desired. In addition, the number of components, such as the number of processors 311, included in the control server 10 is not limited to the example illustrated in Fig. 25. For example, a plurality of processors 311 may be included in the control server 10.

For example, the processor 311 is a programmable device such as a CPU (Central Processing Unit), an MPU (Micro Processing Unit), or a DSP (Digital Signal Processor). Alternatively, the processor 311 may be a device such as an FPGA (Field Programmable Gate Array) or an ASIC (Application Specific Integrated Circuit). The processor 311 executes various kinds of programs including an operating system (OS).

The memory 312 is a RAM (Random Access Memory), a ROM (Read-Only Memory), an HDD (Hard Disk Drive), an SSD (Solid State Drive), and so on. The memory 312 stores an OS program, an application program, and various kinds of data.

The input-output interface 313 is an interface for a display apparatus and an input apparatus not illustrated. For example, the display apparatus is a liquid crystal display and so on. For example, the input apparatus is an apparatus that receives user operations, and examples of the input apparatus include a keyboard and a mouse.

The communication interface 314 is a circuit, a module, and so on for performing communication with other apparatuses. For example, the communication interface 314 includes a NIC (Network Interface Card) and so on.

The functions of the control server 10 are realized by various kinds of processing modules. The processing modules are realized, for example, by causing the processor 311 to execute a program stored in the memory 312. In addition, this program can be recorded in a computer-readable storage medium. The storage medium may be a non-transient (non-transitory) storage medium, such as a semiconductor memory, a hard disk, a magnetic recording medium, or an optical recording medium. That is, the present invention can be embodied as a computer program product. In addition, the above program may be updated by downloading a program via a network or by using a storage medium in which a program is stored. In addition, the above processing modules may be realized by semiconductor chips.

As is the case with the dedicated server 30, the authentication terminal 40, and so on can each be configured by an information processing apparatus, and the basic hardware configuration of the dedicated server 30, the authentication terminal 40, and so on is the same as that of the control server 10. Thus, description of the basic hardware configuration of the dedicated server 30, the authentication terminal 40, and so on will be omitted.

The control server 10, which is an information processing apparatus, includes a computer, and the functions of the control server 10 can be realized by causing the computer to execute a program. In addition, the control server 10 executes a control method of the control server 10 by using this program.

### [Variations]

The configurations, operations, and so on of the information processing system according to the above example embodiments are examples and do not limit the present system configuration, and so on.

The above example embodiments describe the case in which the terminal 60 automatically displays the content for which consent is acquired from a user (for example, the name of the airport to which information is to be provided, and the airline company that the user is planning to use) by acquiring the airline ticket information. However, the terminal 60 may provide the user with a GUI, and so on for acquiring the name of the airport to which information is to be provided, and the airline company that the user is planning to use. That is, instead of acquiring the airline ticket information, the terminal 60 may provide the user with an interface for the user to input the airport to which information is to be provided and the airline company that the user is planning to use.

The token generated by the above authentication server may be used not only for boarding procedures, but also for an immigration procedure. Specifically, the token may be used for a customs procedure, immigration inspection, quarantine procedure, and so on.

The management center (the control server 10) may include a management function and a counting function related to a system usage fee. The control server 10 may manage the amount of tokens generated by the mobile app and the amount of tokens generated by other systems, and may request each airline company to pay a fee based on the amount of tokens generated.

**In** the above example embodiments, the control server 10 and the shared server 50 are described as being different apparatuses. However, the control server 10 may include the function of the shared server 50. **In** other words, the control server 10 and the shared server 50 may be servers constructed on the cloud.

**In** the above example embodiments, a case is described in which the authentication server determines whether or not a user can pass through a gate. However, the authentication terminal 40 may also perform this determination. For example, the authentication server transmits passport information and boarding pass information for the entry identified by a matching processing to the authentication terminal 40. The authentication terminal 40 may use the acquired passport information and boarding pass information to determine whether or not the authenticated person is allowed to pass through the gate.

**In** the above example embodiments, a case in which biometric information related to a face image is transmitted between the authentication server and the authentication terminal 40 is described. However, a feature value generated from the face image may also be transmitted and received between the above apparatuses. **In** this case, the authentication server on the receiving side may use the received feature value and utilize the received feature value in subsequent processing. Alternatively, the biometric information stored in the token management database may be a feature value or a face image. **In** the case where the face image is stored, it is sufficient to generate the feature value from the face image, as necessary. Alternatively, both the face image and the feature value may be stored in the token management database.

**In** the above example embodiments, a case in which the token management database is configured within the control server 10 is described, but the token management database may also be configured on an external database server, and so on. That is, some of the functions of the control server 10, and so on, may be implemented in another server. More specifically, the "system registration control unit (system registration control means)", and so on described above, may be implemented in any of the apparatuses included in the system.

While the data exchange between each apparatus (the control server 10, the terminal 60, and so on) is not limited to any particular mode, data exchanged between these apparatuses may be encrypted. It is desirable that the passport information and so on are transmitted and received between these apparatuses and encrypted data is transmitted and received in order to properly protect this information.

In the flowcharts and sequence diagrams used in the above description, a plurality of steps (processes) are sequentially described. However, the order of the execution of the steps performed in the individual example embodiment is not limited to the described order. In the individual example embodiment, the order of the illustrated steps may be changed to the extent that a problem is not caused on the content of the individual example embodiment. For example, individual processes may be executed in parallel.

The above example embodiments have been described in detail to facilitate the understanding of the present application disclosed and not to mean that all the configurations described above are needed. In addition, if a plurality of example embodiments have been described, each of the example embodiments may be used individually or a plurality of example embodiments may be used in combination. For example, part of a configuration according to one example embodiment may be replaced by a configuration according to another example embodiment. For example, a configuration according to one example embodiment may be added to a configuration according to another example embodiment. In addition, addition, deletion, or replacement is possible between part of a configuration according to one example embodiment and another configuration.

The industrial applicability of the present invention has been made apparent by the above description. That is, the present invention is suitably applicable, for example, to information processing systems related to users who use aircraft, and so on.

A part or the entirety of the example embodiments described above may be described as in the following supplementary notes, but is not limited to the followings.

### [Supplementary Note 1]

A system, including: a shared server that is shared by a plurality of airports as a server that performs an authentication processing; a dedicated server that performs the authentication processing at a single airport; and a control server, wherein the control server determines an airport that a user is planning to use, and transmits information required for the user to proceed with boarding procedures using biometric authentication to either the shared server or the dedicated server, depending on the airport that the user is planning to use.

### [Supplementary Note 2]

The system according to supplementary note 1, wherein the control server transmits, to the shared server or the dedicated server, a token issuance request including biometric information of the user, passport information related to a passport of the user, boarding pass information related to a boarding pass issued to the user, and consent information related to consent of the user for information including the biometric information to be provided to the shared server or the dedicated server.

### [Supplementary Note 3]

The system according to supplementary note 2, wherein the consent information includes information related to the airport that the user is planning to use, and wherein the control server determines a destination to which the token issuance request is transmitted based on the information related to the airport included in the consent information.

### [Supplementary Note 4]

The system according to supplementary note 3, wherein the consent information includes information related to an airline company that operates an aircraft that the user is scheduled to board, and wherein the control server receives a system registration request including the biometric information, the passport information and the consent information from a terminal possessed by the user, and acquire the boarding pass information related to the boarding pass issued to the user by transmitting the passport information to a DCS (Departure Control System) server of the airline company corresponding to information related to the airline company included in the consent information.

### [Supplementary Note 5]

The system according to supplementary note 4, wherein the shared server issues a token for the user in response to the token issuance request received from the control server, and stores the issued token in a token management database prepared for each of the plurality of airports.

### [Supplementary Note 6]

The system according to supplementary note 5, wherein the control server transmits a system registration request received from another system to the shared server or the dedicated server.

### [Supplementary Note 7]

The system according to supplementary note 6, wherein each of the shared server and the dedicated server issues the token in response to receiving the token issuance request from a touch point installed at the airport.

### [Supplementary Note 8]

The system according to supplementary note 7, wherein the token issuance request transmitted from the touch point includes a terminal ID that identifies the touch point, and wherein, in a case where the control server receives the system registration request from the terminal, the control server assigns a virtual terminal ID to the terminal, and transmits the token issuance request including the virtual terminal ID to the shared server or the dedicated server.

### [Supplementary Note 9]

The system according to supplementary note 8, wherein the shared server or the dedicated server generates a token issuance history including a source of the token issuance request based on the terminal ID and the virtual terminal ID, and provides information related to the generated token issuance history.

### [Supplementary Note 10]

The system according to supplementary note 9, wherein the biometric information is a face image or a feature generated from the face image.

### [Supplementary Note 11]

The system according to any one of supplementary notes 1 to 10, wherein the shared server is a server installed on a cloud.

### [Supplementary Note 12]

A server apparatus that communicates with a shared server that is shared by a plurality of airports as a server that performs an authentication processing and a dedicated server that performs the authentication processing at a single airport, wherein the server apparatus, including: a determination unit that determines an airport that a user is planning to use; and a registration unit that transmits information required for the user to proceed with the boarding procedures using biometric authentication to either the shared server or the dedicated server, depending on the airport that the user is planning to use.

### [Supplementary Note 13]

A control method of a server apparatus that communicates with a shared server that is shared by a plurality of airports as a server that performs an authentication processing and a dedicated server that performs the authentication processing at a single airport, the control method including: determining an airport that a user is planning to use; and transmitting information required for the user to proceed with the boarding procedures using biometric authentication to either the shared server or the dedicated server, depending on the airport that the user is planning to use.

### [Supplementary Note 14]

A computer-readable storage medium storing a program causing a computer mounted on a server apparatus that communicates with a shared server that is shared by a plurality of airports as a server that performs an authentication processing and a dedicated server that performs the authentication processing at a single airport to perform processing for: determining an airport that a user is planning to use; and transmitting information required for the user to proceed with the boarding procedures using biometric authentication to either the shared server or the dedicated server, depending on the airport that the user is planning to use.

The entire disclosure of the above patent literature is incorporated herein by reference thereto. While the example embodiments of the present invention have thus been described, the present invention is not limited to these example embodiments. It is to be understood to those skilled in the art that these example embodiments are only examples and that various variations are possible without departing from the scope and spirit of the present invention. That is, the present invention of course includes various variations and modifications that could be made by those skilled in the art in accordance with the overall disclosure including the claims and the technical concept.

### [Reference Signs List]

10 control server
10-1 control server
10-2 control server
20 DCS
30 dedicated server
40 authentication terminal
41 check-in terminal
42 baggage drop machine
43 passenger clearance system
44 gate apparatus
45 boarding gate apparatus
50 shared server
60 terminal
100 terminal
101 shared server
102 dedicated server
103 control server
201 communication control unit
202 system registration control unit
203 storage unit
301 communication control unit
302 token control unit
303 authentication unit
304 storage unit
305 information provision control unit
311 processor
312 memory
313 input-output interface
314 communication interface
401 communication control unit
402 token control unit
403 authentication unit
404 storage unit
405 information provision control unit
501 communication control unit
502 biometric information acquisition unit
503 authentication request unit
504 function realization unit
505 storage unit
601 communication control unit
602 biometric information acquisition unit
603 passport information acquisition unit
604 identity verification unit
605 airline ticket information acquisition unit
606 consent acquisition control unit
607 system registration control unit
608 storage unit

## Claims

1. A system, comprising:
a shared server that is shared by a plurality of airports as a server that performs an authentication processing;
a dedicated server that performs the authentication processing at a single airport; and
a control server,
wherein the control server determines an airport that a user is planning to use, and transmits information required for the user to proceed with boarding procedures using biometric authentication to either the shared server or the dedicated server, depending on the airport that the user is planning to use.

2. The system according to claim 1, wherein the control server transmits, to the shared server or the dedicated server, a token issuance request including biometric information of the user, passport information related to a passport of the user, boarding pass information related to a boarding pass issued to the user, and consent information related to consent of the user for information including the biometric information to be provided to the shared server or the dedicated server.

3. The system according to claim 2, wherein the consent information includes information related to the airport that the user is planning to use, and
wherein the control server determines a destination to which the token issuance request is transmitted based on the information related to the airport included in the consent information.

4. The system according to claim 3, wherein the consent information includes information related to an airline company that operates an aircraft that the user is scheduled to board, and
wherein the control server receives a system registration request including the biometric information, the passport information and the consent information from a terminal possessed by the user, and acquire the boarding pass information related to the boarding pass issued to the user by transmitting the passport information to a DCS (Departure Control System) server of the airline company corresponding to information related to the airline company included in the consent information.

5. The system according to claim 4, wherein the shared server issues a token for the user in response to the token issuance request received from the control server, and stores the issued token in a token management database prepared for each of the plurality of airports.

6. The system according to claim 5, wherein the control server transmits a system registration request received from another system to the shared server or the dedicated server.

7. The system according to claim 6, wherein each of the shared server and the dedicated server issues the token in response to receiving the token issuance request from a touch point installed at the airport.

8. The system according to claim 7, wherein the token issuance request transmitted from the touch point includes a terminal ID that identifies the touch point, and
wherein, in a case where the control server receives the system registration request from the terminal, the control server assigns a virtual terminal ID to the terminal, and transmits the token issuance request including the virtual terminal ID to the shared server or the dedicated server.

9. The system according to claim 8, wherein the shared server or the dedicated server generates a token issuance history including a source of the token issuance request based on the terminal ID and the virtual terminal ID, and provides information related to the generated token issuance history.

10. The system according to claim 9, wherein the biometric information is a face image or a feature generated from the face image.

11. The system according to any one of claims 1 to 10, wherein the shared server is a server installed on a cloud.

12. A server apparatus that communicates with a shared server that is shared by a plurality of airports as a server that performs an authentication processing and a dedicated server that performs the authentication processing at a single airport,
wherein the server apparatus, comprising:
a determination unit that determines an airport that a user is planning to use; and
a registration unit that transmits information required for the user to proceed with the boarding procedures using biometric authentication to either the shared server or the dedicated server, depending on the airport that the user is planning to use.

13. A control method of a server apparatus that communicates with a shared server that is shared by a plurality of airports as a server that performs an authentication processing and a dedicated server that performs the authentication processing at a single airport, the control method comprising:
determining an airport that a user is planning to use; and
transmitting information required for the user to proceed with the boarding procedures using biometric authentication to either the shared server or the dedicated server, depending on the airport that the user is planning to use.

14. A computer-readable storage medium storing a program causing a computer mounted on a server apparatus that communicates with a shared server that is shared by a plurality of airports as a server that performs an authentication processing and a dedicated server that performs the authentication processing at a single airport to perform processing for:
determining an airport that a user is planning to use; and
transmitting information required for the user to proceed with the boarding procedures using biometric authentication to either the shared server or the dedicated server, depending on the airport that the user is planning to use.
